(19) Europäisches Patentamt / European Patent Office / Office européen des brevets

(11) **EP 4 026 882 B1**

(12) **EUROPÄISCHE PATENTSCHRIFT**

(45) Veröffentlichungstag und Bekanntmachung des Hinweises auf die Patenterteilung:
**14.06.2023 Patentblatt 2023/24**

(21) Anmeldenummer: **22020016.6**

(22) Anmeldetag: **20.09.2018**

(51) Internationale Patentklassifikation (IPC):
**C09K 11/80** (2006.01)     **G07D 7/00** (2016.01)
**B42D 25/00** (2014.01)

(52) Gemeinsame Patentklassifikation (CPC):
**C09K 11/7774; B42D 25/00; B42D 25/24;
B42D 25/29; B42D 25/36; B60W 30/143;
B60W 30/182; C09K 11/7776; G07D 7/00;
G07D 7/003; G07D 7/1205; G07D 7/205;**
B60W 2520/10; B60W 2520/105; B60W 2540/30;

(Forts.)

(54) **ECHTHEITSMERKMAL UND VERFAHREN ZUM PRÜFEN EINES ECHTHEITSMERKMALS**

AUTHENTICITY FEATURE AND METHOD FOR TESTING AN AUTHENTICITY FEATURE

CARACTÉRISTIQUE D'AUTHENTICITÉ ET PROCÉDÉ DE VÉRIFICATION D'UNE CARACTÉRISTIQUE D'AUTHENTICITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2017 DE 102017008863**

(43) Veröffentlichungstag der Anmeldung:
**13.07.2022 Patentblatt 2022/28**

(62) Dokumentnummer(n) der früheren Anmeldung(en) nach Art. 76 EPÜ:
**18781960.2 / 3 684 886**

(73) Patentinhaber: **Giesecke+Devrient Currency Technology GmbH**
**81677 München (DE)**

(72) Erfinder: **STARK, Martin**
**81825 München (DE)**

(74) Vertreter: **Giesecke + Devrient IP**
**Prinzregentenstraße 161**
**81677 München (DE)**

(56) Entgegenhaltungen:
EP-A1- 1 316 924     WO-A1-03/014258
WO-A1-2017/059832     US-A1- 2008 067 919
US-A1- 2016 017 223

• **SHUNSUKE KUROSAWA ET AL: "Luminescent properties of Gd(Al,Ga)Ocrystal co-doped with Ce and M", JOURNAL OF PHYSICS: CONFERENCE SERIES, INSTITUTE OF PHYSICS PUBLISHING, BRISTOL, GB, Bd. 619, Nr. 1, 17. Juni 2015 (2015-06-17) , Seite 12039, XP020286428, ISSN: 1742-6596, DOI: 10.1088/1742-6596/619/1/012039 [gefunden am 2015-06-17]**
• **ASAMI KAZUKI ET AL: "Trap depth and color variation of Ce3+-Cr3+co-doped Gd3(Al,Ga)5O12garnet persistent phosphors", OPTICAL MATERIALS, ELSEVIER SCIENCE PUBLISHERS B.V. AMSTERDAM, NL, Bd. 62, 3. Oktober 2016 (2016-10-03), Seiten 171-175, XP029833635, ISSN: 0925-3467, DOI: 10.1016/J.OPTMAT.2016.09.052**
• **XU XIULAI ET AL: "Ultraviolet-blue electroluminescence from Gd3Ga5O12:Ag", APPLIED PHYSICS LETTERS, A I P PUBLISHING LLC, US, Bd. 77, Nr. 5, 31. Juli 2000 (2000-07-31), Seiten 672-674, XP012027155, ISSN: 0003-6951, DOI: 10.1063/1.127081**
• **JIAN XU ET AL: "Toward tunable and bright deep-red persistent luminescence of Cr 3+ in garnets", JOURNAL OF THE AMERICAN CERAMIC SOCIETY., Bd. 100, Nr. 9, 22. Mai 2017 (2017-05-22), Seiten 4033-4044, XP055519338, US ISSN: 0002-7820, DOI: 10.1111/jace.14942**

EP 4 026 882 B1

(52) Gemeinsame Patentklassifikation (CPC): (Forts.)
B60W 2554/801; B60W 2720/103

**Beschreibung**

Die vorliegende Erfindung betrifft ein Echtheitsmerkmal mit einem optischen Speicherleuchtstoff (Englisch: "optical storage phosphor", im Folgenden auch OSP), insbesondere für den Echtheitsnachweis eines Wertdokuments und ein Verfahren zum Prüfen eines Echtheitsmerkmals mit einem optischen Speicherleuchtstoff.

Technischer Hintergrund

Um Wertdokumente, wie beispielsweise Banknoten oder Reisepässe, gegen Fälschungen abzusichern, werden in diese seit Längerem stoffliche Sicherheitsmerkmale auf- oder eingebracht, deren Präsenz durch Messung ihrer charakteristischen Eigenschaften nachgewiesen und zur Authentisierung des Wertdokuments verwendet wird. Beispielsweise wird im Fall der Photolumineszenz von Feststoffpartikeln unter definierter Beleuchtung ein Emissionsspektrum erzeugt, welches dann in charakteristischen Bereichen bewertet wird, beispielsweise durch Vergleich mit einer Referenz. Insbesondere für Hochsicherheitsmerkmale und bei der maschinellen Bearbeitung ist es notwendig, dass diese charakteristischen Eigenschaften der Sicherheitsmerkmale automatisiert präzise genug feststellbar und spezifisch sind.

Als optische Speicherleuchtstoffe (OSP) werden Substanzen wie geeignet dotierte Erdalkalisulfide (z.B. SrS:Eu,Sm), Halide z.B. BaFBr:Eu), Aluminate (z.B. $SrAl_2O_4$,:Eu,Tm), Oxide (z.B. MgO:Tb, BeO, Al2O3:C) und weitere Stoffe bezeichnet, die Energie in Form von Röntgen-, UV-, VIS-, oder radioaktiver Strahlung absorbieren, diese speichern und erst unter gezielter Stimulation in Form von Lumineszenz wieder abgeben. Wird Licht als Stimulus eingesetzt, spricht man von optisch stimulierter Lumineszenz (OSL).

Zum Verständnis von OSP wird nachfolgend deren Funktionsweise erläutert: In einem anorganischen OSP gibt es Leuchtzentren und Fallenzentren. Mit Licht werden die Leuchtzentren angeregt. Dabei geht wenigstens ein Teil der angeregten Ladungsträger aus den Leuchtzentren in ein Leitungsband des OSP über, während die verbleibenden Ladungsträger unter Emission von Photolumineszenz in den Grundzustand der Leuchtzentren relaxieren. Die Ladungsträger im Leitungsband können diffundieren und ein Teil dieser Ladungsträger gelangt zu Fallenzentren, an denen sie gebunden werden. Durch Aufnahme eines Ladungsträgers ist ein Fallenzentrum zunächst angeregt. Aus diesem angeregten Zustand geht es dann zumeist strahlungslos in seinen Grundzustand über. Im Ergebnis ist der aufgenommene Ladungsträger im Grundzustand eines Fallenzentrums (Fallenzustand) gespeichert. Dort kann er bis zu geologischen Zeiträumen von $10^5$ Jahren gespeichert werden. Diese Eigenschaft wird beispielsweise zur geologischen Datierung verwendet. Nach spezifischer Anregung eines Ladungsträgers aus einem Fallenzentrum kann dieser wieder zurück ins Leitungsband gelangen. Im Leitungsband diffundiert dieser Ladungsträger und kann zu einem Leuchtzentrum gelangen, wo er gebunden wird. Durch Aufnahme des Ladungsträgers am Leuchtzentrum ist dieses zunächst in einem angeregten Zustand, aus dem es dann unter Abgabe seiner charakteristischen Lumineszenz in seinen Grundzustand übergeht. Hierbei weist die Lumineszenz eine charakteristische spektrale Verteilung und intrinsische Lebensdauer auf. Bei der Diffusion der Ladungsträger durch das Leitungsband lässt sich als charakteristische Eigenschaft von OSP unter anderem eine lichtinduzierte, persistente Leitfähigkeit feststellen.

In Abgrenzung zu OSL wird der angeregte Ladungsträger bei Phosphoreszenz im Leuchtzentrum selbst in einen Triplettzustand gebracht. Aus diesem relaxiert er mit einer charakteristischen Zeitkonstante in einen anderen Zustand des Leuchtzentrums. D.h., bei der Phosphoreszenz ist eine Änderung der Spin-Mannigfaltigkeit beteiligt (siehe auch IUPAC Gold Book: Phosphorescence, 23.08.2017). In Abgrenzung zur Phosphoreszenz findet hingegen beim OSP eine umkehrbare, lichtgetriebene Donor-Akzeptor-Reaktion statt. In einer vereinfachten Darstellung dieser umkehrbaren, lichtgetriebenen Donor-Akzeptor-Reaktion gibt beim Speichervorgang das Leuchtzentrum als Donor einen Ladungsträger ab (in der Regel wird das Leuchtzentrum oxidiert) und ein davon unterschiedliches Fallenzentrum nimmt als Akzeptor den Ladungsträger auf (das Fallenzentrum wird in der Regel also reduziert). Insbesondere beschreibt Hölsä in "Persistent luminescence beats the afterglow: 400 years of persistent luminescence", Electrochem. Soc. Interface (2009), 18(4), Seiten 42-45, die grundlegenden Unterschiede zwischen OSP und Phosphoreszenz.

Bei OSPs ist das Anregungsspektrum der an Fallenzentren gebundenen Ladungsträger (Auslesespektrum) unabhängig von dem Anregungsspektrum (Aufladespektrum) oder Emissionsspektrum der Leuchtzentren. Insofern grenzt sich optisch stimulierte Lumineszenz auch von der üblichen, durch simultane Mehrphotonenprozesse induzierten Upconversion oder Antistokes-Phänomenen ab: Sowohl hinsichtlich des Aufladespektrums als auch des Emissionsspektrums der Leuchtzentren gibt es keinen notwendigen physikalischen Bezug zum Auslesespektrum der (reduzierten) Fallenzentren. Generell können also die auslesenden Wellenlängen kürzer, gleich oder länger als die Emissionswellenlänge sein.

Für die Verwendung solcher Speicherleuchtstoffe als Echtheitsmerkmal gibt es in der Literatur vereinzelte Offenlegungen. Beispielsweise offenbart die Schrift US 4,387,112 die generelle Möglichkeit, Speicherleuchtstoffe als Sicherheitsmerkmal einzusetzen und beschreibt dazu insbesondere Sulfide wie beispielsweise (Zn,Cd)S:Cu.

In der Veröffentlichungsschrift EP 1 316 924 A1 erfolgt die Echtheitsprüfung über die Detektion von Photolumineszenz bzw. über das Auftreten von optisch stimulierter Lumineszenz (OSL) von Stoffen wie BaFBr:Eu oder CsBr:Eu.

Ein anorganischer Speicherleuchtstoff (wie SrS:Eu,Sm oder $Sr_4Al_{14}O_{25}$:Eu,Dy) und ein Upconverter-Leuchtstoff werden in der Veröffentlichungsschrift WO 2010/064956 A1 verwendet.

In der Veröffentlichungsschrift DE 10 2011 010756 A1 werden Herstellverfahren für Silikatbeschichtete nanopartikuläre Speicherleuchtstoffe sowie deren möglicher Einsatz als Marker beschrieben.

WO03014258 A1 offenbart ein Wertdokument enthaltend einen Leuchtstoff der Formel (Gd0.99Nd0.01)3Sc2(Ga0.75Cr0.25)3O12.

Die vorbeschriebenen Verfahren verzichten auf eine quantitative Auswertung des dynamischen und charakteristischen Speicherverhaltens eines OSP als Echtheitsmerkmal und basieren stattdessen auf reproduzierbaren Messungen an definierten Systemzuständen. Diese Art der Prüfung versetzt einen Nachahmer potenziell in die Lage, Informationen zu sammeln, die ihm eine Nachstellung des Stoffs erleichtern. Eine erfolgreiche stoffliche Nachstellung würde dann auch die Echtheitsprüfung bestehen.

Ferner sind die aus dem Stand der Technik bekannten OSP vielfach chemisch instabil (wie BaFBr:Eu, SrS:Eu,Sm, $Sr_4Al_{14}O_{25}$:Eu,Dy) oder instabil gegen Lichteinflüsse (wie ZnS:Cu,Co, (Zn,Cd)S:Cu) und müssen gegebenenfalls aufwändig mit einer Beschichtung stabilisiert werden. Zudem stellt die Giftigkeit einiger Stoffe (wie BaFBr:Eu) und/oder ihrer Zersetzungsprodukte (z.B. Schwefelwasserstoff, Barium-, Fluorid-, oder Cadmium-Ionen) und/oder der Ausgangsstoffe (z.B. $BaCl_2$) nicht nur ein Hemmnis für die Anwendung dar, sondern erfordert auch bei der Herstellung und Entsorgung erhöhten Aufwand gegenüber stabilen ungiftigen Stoffen.

Darüber hinaus weisen derzeit verfügbare optische Speicherleuchtstoffe zudem wenigstens einen weiteren der folgenden Nachteile auf: nicht angepasste spektrale Speichereigenschaften, langsame intrinsische Lumineszenz, intensive persistente Lumineszenz (sogenanntes Nachleuchten), langsame Auslesbarkeit - diese drei letztgenannten Effekte erschweren eine Verwendung eines OSP als schnell maschinenlesbares Echtheitsmerkmal -, Notwendigkeit eines hochenergetischen Aufladens und geringe Intensität der Emission.

Beschreibung der Erfindung

Ausgehend von dem oben beschriebenen technischen Hintergrund ist es eine Aufgabe der Erfindung, ein Echtheitsmerkmal mit einem optischen Speicherleuchtstoff bereitzustellen, der insbesondere die oben genannten Nachteile bekannter Echtheitsmerkmale mit optischen Speicherleuchtstoffen löst. Weitere Aufgabe ist die Bereitstellung eines Verfahrens zum Prüfen eines Echtheitsmerkmals, wobei gegenüber den bekannten Verfahren eine erhöhte Sicherheit erzielt werden soll.

Diese Aufgaben werden insbesondere durch ein hier beschriebenes Echtheitsmerkmal mit einem optischen Speicherleuchtstoff und einem Verfahren zum Prüfen eines Echtheitsmerkmals mit den Merkmalen der unabhängigen Patentansprüche gelöst. Vorteilhafte Weiterbildungen ergeben sich aus den Unteransprüchen, der Beschreibung, den Figuren sowie den im Zusammenhang mit den Figuren beschriebenen Ausführungsbeispielen.

Entsprechend wird ein optischer Speicherleuchtstoff angegeben, der auf einer Granatstruktur basiert und die folgende Zusammensetzung aufweist:

$$(Gd_xLn_y)(Ga_mAl_nA_k)O_{12\pm d}:Ce_p\,Q_q\,R_r\,T_t; \qquad (1)$$

wobei:

- Ln zumindest eines der folgenden Elemente umfasst: La, Lu, Y;
- A zumindest eines der folgenden Elemente umfasst: Ge, Sc, Si;
- Q zumindest eines der folgenden Elemente umfasst: Ag, Cr, Hf, Mo, Nb, Sn, Ta, Ti, W, Zr; bevorzugt wenigstens eines der Elemente Ag, Mo, Nb, Sn, Ti, Zr;
- R zumindest eines der folgenden Elemente umfasst: Bi, Pr, Nd, Sm, Eu, Tb, Dy, Ho, Er, Tm, Yb;
- T zumindest eines der folgenden Elemente umfasst: F, Li, Mg, K, Na, B; bevorzugt wenigstens eines der Elemente F, Li;
- $1.0 \leq x \leq 3.2$ und $0 \leq y \leq 1.65$ ;
- $0.5 \leq m \leq 5.2$, $0 \leq n \leq 4.7$ und $0 \leq k \leq 0.5$, wobei $4.8 \leq m+n+k \leq 5.2$;
- $0 \leq p \leq 0.1$, wobei p=0 nur für Q = Zr; wobei bevorzugt $0.001 \leq p \leq 0.1$ ist;
- $0 \leq q \leq 0.05$;
- $0 \leq r \leq 0.05$;
- $0 \leq t \leq 0.1$;
- $0 \leq d \leq 0.5$;
- p+q > 0.002;
- q+r > 0.002; und

- $2.8 \leq x+y+p+r \leq 3.2$.

Durch Abweichungen von einer formal ladungsneutralen Stöchiometrie und/oder durch abweichende Ladung und / oder durch abweichende Ionenradien zudotierter Ionen (Kodotierungen) im Vergleich zur zugrundeliegenden Granatstruktur des Wirtsgitters des hier beschriebenen OSP wird eine Defektstruktur in dem genannten Wirtsgitter bereitgestellt. Die zudotierten Ionen sowie die dadurch ausgelöste Defektstruktur sind wesentlicher Bestandteil des hier beschriebenen Stoffes.

Bei dem hier beschriebenen optischen Speicherleuchtstoff handelt es sich um einen anorganischen, oxidischen Stoff mit defektreicher Granatstruktur als Wirtsgitter, bevorzugt mit Cer als Leuchtzentrum. Zugrunde liegt die ideale ladungsausgeglichene Formulierung eines Gadolinium-Aluminium-Granats, $Gd_3Al_5O_{12}$. Durch gezielte Abweichung von der idealen ladungsausgeglichenen Stöchiometrie sowie geeigneten Kodotierungen kann ein Speicherleuchtstoff bereitgestellt werden, der sich durch seine Stabilität, seine schnelle Auslesbarkeit, sein angepasstes Auslesespektrum und/oder seine Aufladbarkeit im blauen Spektralbereich auszeichnet.

Die bereits durch geringe Variationen in der Stoffzusammensetzung und -herstellung beeinflussbare Defektstruktur ist Teil des Stoffes, da sie maßgeblich die Eigenschaften und somit die Unterscheidbarkeit eines bestimmten Stoffes von anderen Stoffen ähnlicher Zusammensetzung bestimmt.

Bei der Betrachtung der Fallenzentren und Leuchtzentren des hier beschriebenen OSP stellen diese eigenständige optische Systeme dar. Hierbei wurde überraschend festgestellt, dass durch eine gezielte Beeinflussung der Defektstruktur des OSP das Speicherverhalten des OSP veränderbar und anpassbar ist. Darüber hinaus kann überraschenderweise diese gezielte Anpassung durch chemische Modifikation der Fallenzentren, der Leuchtzentren sowie des Granats (also des Festkörpers, welcher die Fallen- und Leuchtzentren enthält) des OSP erfolgen. Erstens kann über Abweichungen von der idealen Stöchiometrie des Granats sowie seiner Zusammensetzung gezielt die optisch stimulierte Lumineszenz gefördert, und die Thermolumineszenz bei Raumtemperatur (auch als Nachleuchten oder persistente Lumineszenz bezeichnet) gehemmt werden. Zweitens können durch unterschiedliche Kodotierungen und Modifikationen am zugrundeliegenden Granat Parameter der optisch stimulierten Lumineszenz wie z.B. zugeordnete charakteristische Gedächtniseigenschaften (zur Definition siehe unten), Auslesegeschwindigkeit und Auslesespektrum gezielt eingestellt werden. So lassen sich für ein gleichbleibendes Auflade- und Emissionsverhalten (bedingt durch die Eigenschaften der Leuchtzentren) im Speicherverhalten (bedingt durch die Eigenschaften der Fallenzentren) für den jeweiligen Einsatz optimierte Stoffe erzielen. Daraus ergibt sich, dass das Speicherverhalten des OSP einer gezielten Anpassung durch chemische Modifikation zugänglich ist.

Die chemische Natur und die kristallographische Eigenschaften der Fallenzentren, Leuchtzentren und/ oder Wirtsgitter der OSP bestimmen die relative energetische Lage der beteiligten Zustände ((Energie-)Niveaus), z. B. Fallenzustände, Grundzustände, angeregte Zustände, und des Leitungsbandes.

Der oben beschriebene optische Speicherleuchtstoff basiert insbesondere auf den folgenden Feststellungen und Erkenntnissen. Es wird von der Formulierung eines stöchiometrischen Gadolinium-Aluminium-Granats, vereinfacht bezeichnet als $(Gd_3)(Al_5)O_{12}$, ausgegangen. Durch zumindest eine der im Folgenden beschriebenen Modifikationen (Modifikationen 1 bis 8) wird der hier beschriebene Speicherleuchtstoff bereitgestellt. Die Modifikation können als formale Ersetzungen, Überschuss, Unterschuss und/ oder Ergänzungen erfolgen.

1. Gadolinium (Gd) wird teilweise durch ein oder mehrere Seltenerd-Elemente aus der Gruppe (Lanthan (La), Lutetium(Lu), Yttrium (Y)) ersetzt. Bevorzugt sind die Kombinationen (Gd und Y), (Gd und La). Besonders bevorzugt ist die Kombination von Gd und La.

2. Aluminium (Al) wird ganz oder teilweise durch eines oder mehrere Elemente der Gruppe, umfassend Gallium (Ga) oder Scandium (Sc), ersetzt. Außerdem kann Al auch teilweise durch Silizium (Si) und/oder Germanium (Ge) ersetzt werden. Bevorzugt wird Al teilweise durch Ga ersetzt.

3. Gegenüber der stöchiometrischen ladungsausgeglichenen Formulierung eines Gadolinium-Aluminium-Granats $(Gd_3)(Al_5)O_{12}$ können die zuvor unter dem 1. Punkt genannten Seltenerd-Elemente an der Gadolinium-Position in Summe von der stöchiometrischen Menge abweichend vorliegen, um die Defektstruktur zu stabilisieren.

4. Gegenüber der stöchiometrischen ladungsausgeglichenen Formulierung eines Gadolinium-Aluminium-Granats $(Gd_3)(Al_5)O_{12}$ können die zuvor unter dem 2. Punkt genannten Elemente an der Aluminium-Position in Summe von der stöchiometrischen Menge abweichend vorliegen, um die Defektstruktur zu stabilisieren.

5. Der nach den obigen Schritten resultierende Stoff wird bevorzugt mit Cer dotiert, das den Platz eines der Ionen der Seltenerd-Elemente (vgl. 1. Punkt) (Gd, La, Lu, Y) einnimmt.

Die Modifikationen aus den Punkten 1 bis 5 betreffen das Wirtsgitter (Granat) in seiner Zusammensetzung und den Abweichungen von der idealen Stöchiometrie sowie die Leuchtzentren. Bevorzugt stellen $Ce^{3+}$-Ionen die emittierenden Leuchtzentren (im Folgenden auch als Emitter bezeichnet) dar. Es wurde herausgefunden, dass mit den zuvor genannten Abweichungen von der Formulierung eines stöchiometrischen, insbesondere mit Cer dotierten, Gadolinium-Aluminium-Granats sowohl die Defektstruktur des optischen Speicherleuchtstoffs beeinflusst werden kann, als auch seine Bandlücke und die zugehörige Lage des elektronischen Niveaus in Bezug auf das Dotierion und damit die Lage der Niveaus in den Leucht- und Fallenzentren. Dies wirkt sich auf die erzielbare Intensität der optisch stimulierten Lumineszenz, die Auflade- und Auslesespektren sowie die erzielbare Auslesegeschwindigkeit und Intensität des Nachleuchtens aus.

Des Weiteren können die folgenden Modifikationen durchgeführt werden:

6. Als Kodotierung können ein oder mehrere Elemente aus der Gruppe Ag, Cr, Hf, Mo, Nb, Sn, Ta, Ti, W, Zr ausgewählt werden. Diese Ionen können zu einer komplexeren Substitution, vor allem die Al-Position betreffend, aber auch mit Auswirkung auf die Gd-Position führen. Insbesondere wird keine Ladungsneutralität der nominellen Formulierung durch Zugabe von z.B. Erdalkali-Ionen erzwungen. Hierbei hat sich gezeigt, dass dadurch die Defektstruktur des OSP gezielt beeinflusst werden kann, und damit Fallenzustände bereitgestellt werden können.

7. Statt oder zusätzlich zu den unter dem vorherigen 6. Punkt genannten Kodotierungen können auch ein oder mehrere Elemente aus der Gruppe Pr, Nd, Sm, Eu, Tb, Dy, Ho, Er, Tm, Yb sowie Bismut (Bi) zur Dotierung ausgewählt werden. Diese Ionen können geeignete Fallenzustände bereitstellen.

8. Ferner können eines oder mehrere der Elemente B, F, Li, Mg, K und/ oder Na zudotiert werden. Dies kann beispielsweise über das eingesetzte Flussmittel, wie LiF oder $H_3BO_3$, erreicht werden. Hierbei wurde herausgefunden, dass diese Elemente Nachleuchten und Auslesegeschwindigkeit des Speicherleuchtstoffes beeinflussen.

Die chemischen Modifikationen der Punkte 6 bis 8 werden als Kodotierungen aufgefasst, da sie nur in niedriger Konzentration (vergleichbar mit der Konzentration der Leuchtzentren) vorliegen und/oder aufgrund abweichender Ionengrößen und oder abweichender Ionenladung (jeweils bezogen auf das Wirtsgitter) komplexe Einflüsse auf die Defektstruktur des OSP ausüben. Bezüglich der Modifikationen gemäß den obigen Punkten wurden die folgenden Effekte beobachtet: Kodotierungen gemäß dem obigen 6. Punkt können die Defektstruktur des OSP ebenso steuern wie die Dotierungen gemäß dem 7. Punkt. Der Unterschied zwischen den beiden Dotierungen aus dem 6. Punkt und dem 7. Punkt liegt insbesondere an dem Platz der Substitution, wobei die Elemente aus dem 7. Punkt die zuvor in dem 1. Punkt genannten Seltenerd-Elemente (La, Gd, Y, Lu) an der Gadolinium-Position ersetzen. Die Elemente aus dem 8. Punkt stellen Dotierungen dar, die in bestimmten Kombinationen förderlich die Ausbildung der Defektstruktur beeinflussen können.

In dieser Anmeldung ist die Verwendung von unbestimmten Artikeln, wie beispielsweise "ein", "einer", etc., nicht als einschränkend zu verstehen. Insbesondere kann mit einem unbestimmten Artikel sowohl eine Einzahl als auch eine Mehrzahl verstanden werden, beispielsweise im Sinne von "mindestens ein" oder "ein oder mehrere", solange dies nicht explizit ausgeschlossen ist, wie beispielsweise durch den Ausdruck "genau ein". Ferner werden in dieser Anmeldung Dezimalstellen in der Regel mit einem Punkt, insbesondere nach der Art "x.y" dargestellt, wobei "y" den ersten Wert der Dezimalstelle angibt.

Wenn in dieser Anmeldung eine chemische Variable, insbesondere Ln, A, Q, R und T, verwendet wird, bedeutet die Formulierung "eines der folgenden Elemente umfasst" insbesondere, dass die Variable mit einem der Elemente oder einer Kombination aus den in Bezug damit genannten Elementen gebildet ist. Als Kombination der Elemente kann auch ein Elementmolekül gemeint sein, bei dem sich zwei oder mehr Atome eines einzigen chemischen Elements zu einem Molekül verbinden. Beispielsweise kann T als $F_2$ ausgebildet sein.

In dieser Anmeldung werden mit den Begriffen "Dotierung" oder "Kodotierung" und davon abgeleiteten Wortbildungen bewusst in den Herstellungsprozess zugeführte Stoffe bezeichnet, deren Konzentration die typische Konzentration (etwa 100 ppm) von Verunreinigungen in den Rohstoffen signifikant übersteigt (typischerweise 300 ppm). Ist die Konzentration eines Elements in der nominellen Stoffformulierung mit "0" bezeichnet, so wird dieses Element nicht bewusst zugeführt und liegt maximal in einer Konzentration verursacht durch Verunreinigung der Rohstoffe vor. Die oben eingeführte Benennung einer Dotierung beziehungsweise Kodotierung ab der gegebenen Mindestkonzentration beruht einer beobachteten Wirksamkeit im erfindungsgemäßen Stoff.

Der OSP basiert auf einer Granatstruktur. Bevorzugt weist der OSP eine Granatstruktur als Grundstruktur auf, wobei herstellungsbedingt in geringem Umfang weitere Nebenphasen auftreten können. Eine Granatstruktur lässt sich verallgemeinert in der Form $\{X_3\}[Y_2](Z_3)O_{12}$ beschreiben. Dabei bezeichnen die Klammern {.} dodekaedrisch, [.] oktaedrisch und (.) tetraedrisch koordinierte Gitterplätze. Weiterhin sind aus Geller, S. (1967), Crystal chemistry of the garnets, Zeitschrift für Kristallographie-Crystalline Materials, 125(1-6), 1-47, und Grew, E.S., Locock, A.J., Mills, S.J., Galuskina, I.O., Galuskin, E.V., Halenius, U. (2013): Nomenclature of the garnet supergroup, IMA-Report, American Mineralogist, Volume 98, 785-811, deren Inhalt in die Beschreibung hier aufgenommen wird, Granatstrukturen bekannt.

Ausgangspunkt für den hier beschriebenen optischen Speicherleuchtstoff ist formal der Gadolinium-Aluminium-Granat, dessen ideale ladungsneutrale Stöchiometrie als ${Gd_3}[Al_2](Al_3)O_{12}$, vereinfacht als $(Gd_3)(Al_5)O_{12}$ angegeben werden kann. An diesem Gadolinium-Aluminium-Granat werden durch Dotierungen Elemente ersetzt, sodass dann der hier beschriebene OSP mit seinen bevorzugten Eigenschaften erreicht wird. Die hier geforderte Abweichung von der stöchiometrischen Beschreibung wird formal durch die Angabe des Sauerstoffanteils $O_{(12+d)}$ und den genannten Anteil $T_t$ ausgeglichen. Diese formale Beschreibung spiegelt wieder, dass sich durch die Ausbildung von Defekten (beispielsweise fehlenden oder überzähligen Sauerstoff-Atomen) die Ladungsneutralität des entstandenen Stoffs einstellt, weil keine Ionen für einen formell erzwungenen Ladungsausgleich explizit zugegeben werden. Hierbei stellt sich der genaue Wert von d ein. Die Gesamtheit der im OSP auftretenden Defekte wird zusammen mit den dadurch bedingten elektronischen Zuständen als Defektstruktur bzw. Defektzustände bezeichnet. Die Defektstruktur beschreibt die Wirkung lokaler Defekte und ist komplementär zur periodischen Kristallstruktur, welche die nichtlokalen Eigenschaften erzeugt.

Der hier beschriebene OSP weist Ladungsträger (bevorzugt: Elektronen), Leuchtzentren und Fallenzentren auf. Leuchtzentren und Fallenzentren sind optisch aktive Systeme in dem hier beschriebenen Speicherleuchtstoff. Die Leuchtzentren sind insbesondere lichtemittierend ausgebildet, das heißt, sie können unter Aussendung von Photonen von einem angeregten Zustand der Leuchtzentren in einen Grundzustand der Leuchtzentren übergehen. In den Fallenzentren können Elektronen aus dem Leitungsband in einen angeregten elektronischen Zustand der Fallenzentren übergehen und von dort, insbesondere strahlungslos, in den Grundzustand der Fallenzentren relaxieren. Dort bleiben sie gespeichert, bis durch einen geeigneten -bevorzugt optischen- Prozess wiederum genug Energie zugeführt wird, diese gespeicherten Elektronen zurück in das Leitungsband zu heben. Die Grundzustände von Fallenzentren werden als Fallenzustände bezeichnet.

Als Aufladelicht wird Licht bezeichnet, das (beispielsweise hinsichtlich seiner Wellenlänge und Intensität) geeignet ist, den OSP aufzuladen. Als Ausleselicht wird Licht bezeichnet, das (beispielsweise hinsichtlich seiner Wellenlänge und Intensität) geeignet ist, den OSP auszulesen. Als Aufladepuls wird ein Puls von Aufladelicht bezeichnet und als Auslesepuls wird ein Puls von Ausleselicht bezeichnet.

Der hier beschriebene OSP ist bevorzugt dazu eingerichtet, dass die Ladungsträger durch das Beaufschlagen mit einem Aufladepuls und/oder mit einer Abfolge aus Aufladepulsen (bezeichnet als Aufladesequenz), von den Leuchtzentren zumindest teilweise in die Fallenzentren übergehen und/oder durch das Beaufschlagen mit einem Auslesepuls und/oder mit einer Abfolge von Auslesepulsen (bezeichnet als Auslesesequenz) von den Fallenzentren zumindest teilweise in die Leuchtzentren übergehen. Es ist insbesondere möglich, dass der OSP Elektronen aufweist, welche sich vor dem Beaufschlagen mit der Auslesesequenz in den Fallenzentren befinden und durch das Beaufschlagen mit der Auslesesequenz energetisch angehoben werden und im Leitungsband diffundieren. Dies führt zu einer momentan (lichtinduziert) erhöhten Leitfähigkeit des optischen Speicherleuchtstoffs.

Bei den Leuchtzentren und den Fallenzentren handelt es sich jeweils um Defektzentren im Kristallgitter, die beispielsweise durch eine Kodotierung mit zwei unterschiedlichen Elementen bereitgestellt werden. Ferner können die Defektzentren durch energiereiche Bestrahlung (beispielsweise mit Teilchen-, Gamma- und/oder Röntgenstrahlung) und/oder auch durch die Prozessführung bei der Herstellung des optischen Speicherleuchtstoffs (beispielsweise Abschrecken der Schmelze) gezielt in einem Material erzeugt werden.

Insbesondere unterscheiden sich Leuchtzentren und Fallenzentren voneinander durch ihre räumliche Position innerhalb des OSP und/oder durch ihre chemische Identität. Ein Aufladen des OSP mit einem Aufladepuls kann einer Oxidation der Leuchtzentren und einer Reduktion der Fallenzentren entsprechen. Umgekehrt kann das Auslesen des OSP mit einem Auslesepuls einer Reduktion der Leuchtzentren und einer Oxidation der Fallenzentren entsprechen.

In einem hier beschriebenen OSP können also verschiedene Licht-Materie-Wechselwirkungen auftreten:

- Durch Beaufschlagen mit einem Aufladepuls (Aufladen) werden an den Leuchtzentren Ladungsträger aus dem Grundzustand angeregt. Der Aufladepuls weist insbesondere eine definierte Wellenlänge und/oder eine definierte Pulsdauer und/oder eine definierte Pulsenergie auf. Ein Aufladepuls kann eine oder mehrere (Peak-) Wellenlängen (Maxima der spektralen Verteilung) aufweisen. Beispielsweise ist der Aufladepuls als Laserpuls ausgebildet. Neben der Wellenlänge, Pulsdauer und Pulsenergie können auch Strahlgröße und/ oder die Leistung des Aufladepulses zu dessen Definition herangezogen werden. Mehrere Aufladepulse in Folge werden als Aufladesequenz bezeichnet, dabei können insbesondere zwischen den einzelnen Aufladepulsen Messwerte aufgenommen werden.
- Nach dem Aufladen können einige angeregte Ladungsträger am Leuchtzentrum spontan strahlend relaxieren. Dies entspricht der bekannten Photolumineszenz und wird hier als intrinsische Lumineszenz bezeichnet. Die intrinsische Lumineszenz weist insbesondere eine charakteristische Abklingzeit auf, die auch als intrinsische Lebensdauer bezeichnet wird. Andere angeregte Ladungsträger können auf die Fallenzentren übergehen und dort gespeichert werden.

- Die an den Fallenzentren gespeicherten Ladungsträger können durch Energieeintrag angeregt werden, auf die Leuchtzentren übergehen, und dort strahlend relaxieren. Erfolgt dieser Energieeintrag thermisch, spricht man von Thermolumineszenz. Die Thermolumineszenz bei Raumtemperatur wird auch als Nachleuchten oder persistente Lumineszenz bezeichnet.

- Bevorzugt erfolgt der Energieeintrag optisch durch Beaufschlagung mit einem definierten Auslesepuls (Auslesen). Der Auslesepuls weist insbesondere eine definierte Wellenlänge und/oder eine definierte Pulsdauer und/oder eine definierte Pulsenergie auf. Ein Auslesepuls kann eine oder mehrere (Peak-)Wellenlängen aufweisen. Beispielsweise ist der Auslesepuls als Laserpuls ausgebildet. Neben der Wellenlänge, Pulsdauer und Pulsenergie können auch Strahlgröße und/ oder die Leistung des Auslesepulses zu dessen Definition herangezogen werden. Mehrere Auslesepulse in Folge werden als Auslesesequenz bezeichnet, dabei können insbesondere zwischen den einzelnen Auslesepulsen Messwerte aufgenommen werden.

- Werden durch einen Auslesepuls Ladungsträger aus den Fallenzentren angeregt und relaxieren dann strahlend an den Leuchtzentren, spricht man von optisch stimulierter Lumineszenz (OSL). Die OSL weist insbesondere eine Intensität und ein Wellenlängenspektrum (Emissionsspektrum) auf.

- Wird für jeden Auslesepuls einer Auslesesequenz die Intensität der OSL gemessen und in einer Zeitreihe gespeichert, erhält man die Auslesekurve I(t). Alternativ kann auch ein einzelner Auslesepuls angewendet werden, der so lange anhält, bis die Intensität der OSL merklich abgesunken ist, beispielsweise auf 50% oder 10% des initialen Wertes. Die erzielte Signalintensität der OSL hängt von Intensität und Wellenlänge (Auslesespektrum) des eingestrahlten Ausleselichts ab, sowie von der Vorgeschichte der Messung. Eine höhere Intensität des Auslesepulses führt zu einer initial erhöhten OSL-Signalintensität und schnellerem Auslesen des Stoffes. Der Einfluss von charakteristischen, stoffspezifischen Effekten, beispielsweise Transport- und Wiedereinfangeffekten, kollektiven Energieübertragungsprozessen und strahlungslosen Beiträgen, führt dann zu Abweichungen von einem rein exponentiellen Verhalten der Auslesekurve. Die Form der Kurve hängt also von Eigenschaften des Stoffes, von der Temperatur und anderen Umwelteinflüssen, sowie von Wellenlänge, Intensität und zeitlichem Verlauf des auslesenden Lichtes (z.B. Auslesesequenz oder einzelner Auslesepuls) ab.

Empirisch lässt sich im Fall eines einzelnen, langanhaltenden Auslesepulses die Auslesekurve vorzugsweise mit einer

$$I(t) = (a + bt)^{-\frac{1}{b}} + c$$

Potenzfunktion vom Typ anpassen, wobei t=0 den Beginn des Auslesens bezeichnet und a, b und c charakteristische Parameter der Anpassung darstellen, die durch Eigenschaften des Stoffes, des Ausleselichts und der Umgebung bedingt werden. Vergleich man zwei Stoffe bei definierten Umgebungsbedingungen unter derselben Auslesesequenz oder demselben einzelnen Auslesepuls, so ist die Auslesekurve stoffspezifisch. Auf diesem Zusammenhang beruht die spezifische Echtheitsbewertung.

Der hier beschriebene OSP weist insbesondere ein Aufladespektrum auf. Das Aufladespektrum beschreibt, wie effektiv sich der OSP mit Aufladepulsen verschiedener Wellenlängen aufladen lässt. Um das Aufladespektrum zu bestimmen, definiert man zunächst einen festen Auslesepuls. Dann wird der OSP (z.B. durch wiederholtes Beaufschlagen mit dem definierten Auslesepuls) so präpariert, dass er keine OSL zeigt - es sind dann im Wesentlichen keine Ladungsträger an den Fallenzentren gespeichert. Der so präparierte OSP wird nun mit einem Aufladepuls beaufschlagt, dessen Spektrum im Wesentlichen nur aus einer definierten Wellenlänge besteht. Anschließend wird er mit dem definierten Auslesepuls beaufschlagt und die Intensität der OSL gemessen. Die gemessene Intensität wird zusammen mit der Wellenlänge des Aufladepulses als ein Wertepaar gespeichert. Dieser Vorgang (Präparation des OSP, Aufladen, Auslesen, Messen der Intensität, Abspeichern des Wertepaars) wird nun für andere Aufladepulse wiederholt, die sich voneinander nur in ihrer Wellenlänge unterscheiden. Hierbei ist wichtig, immer den gleichen, definierten Auslesepuls zu verwenden. Die Gesamtheit der so erhaltenen Wertepaare ergibt das Aufladespektrum.

In einer bevorzugten Ausprägung wird ein OSP gewählt, dessen Aufladespektrum mindestens ein lokales Minimum aufweist, bei dem die Intensität der OSL im Vergleich zu den zwei flankierenden Maxima um mindestens 10% reduziert ist.

Der hier beschriebene OSP kann alternativ oder zusätzlich ein Auslesespektrum aufweisen. Das Auslesespektrum beschreibt, wie effektiv sich der OSP mit Auslesepulsen verschiedener Wellenlängen auslesen lässt. Um das Auslesespektrum zu bestimmen, definiert man zunächst einen festgelegten Aufladepuls. Dann wird der OSP (z.B. durch wiederholtes Beaufschlagen mit einem Auslesepuls) so präpariert, dass er keine OSL zeigt - es sind dann im Wesentlichen keine Ladungsträger an den Fallenzentren gespeichert. Der so präparierte OSP wird nun mit dem definierten Aufladepuls beaufschlagt. Anschließend wird er mit einem Auslesepuls beaufschlagt, dessen Spektrum im Wesentlichen nur aus einer definierten Wellenlänge besteht, und die Intensität der OSL gemessen. Die gemessene Intensität wird zusammen mit der Wellenlänge des Auslesepulses als ein Wertepaar gespeichert. Dieser Vorgang (Präparation des OSP, Aufladen, Auslesen, Messen der Intensität, Abspeichern des Wertepaars) wird nun für andere Auslesepulse wiederholt, die sich voneinander nur in ihrer Wellenlänge unterscheiden. Hierbei ist wichtig, immer den gleichen, definierten Aufladepuls zu verwenden. Die Gesamtheit der so erhaltenen Wertepaare ergibt das Auslesespektrum.

Bevorzugt weist der OSP ein Auslesespektrum mit einer ausgeprägten spektralen Struktur auf. Insbesondere weist das Auslesespektrum mindestens ein lokales Minimum auf, bei dem die Intensität der OSL im Vergleich zu den flankierenden Maxima um mindestens 10%, besonders bevorzugt um mindestens 30% reduziert ist.

Wie bereits erwähnt, zeichnet sich der hier beschriebene OSP insbesondere dadurch aus, dass er bezüglich mindestens einer Eigenschaft ein Gedächtnis aufweist. Insbesondere hängen messbare Eigenschaften des OSP von der Vorgeschichte des für die Messung der Eigenschaften verwendeten Messprozesses ab (sogenannte Nichtkommutativität). Es ergibt sich somit eine Pfadabhängigkeit des Messergebnisses. Beispiele für charakteristische Gedächtniseigenschaften sind weiter unten in dieser Beschreibung aufgeführt. Das heißt, eine Messung beeinflusst das Ergebnis der wenigstens einen nachfolgenden Messung. Bei einem Messprozess handelt es sich hierbei und im Folgenden um eine Beaufschlagung des OSP mit einem Lichtsignal und die Aufnahme eines Messwerts (Messergebnis) in Reaktion auf dieses Lichtsignal. Bei dem Lichtsignal handelt es sich insbesondere um einen Aufladepuls, und/ oder einen Auslesepuls. Mehrere Messprozesse in Folge werden als Messsequenz bezeichnet, insbesondere kann eine Messsequenz sowohl Auflade- als auch Auslesepulse umfassen.

Bevorzugt zeichnet sich der hier beschriebene OSP durch die folgende Eigenschaft aus: Zwei verschiedene optische Speicherleuchtstoffe können unter einer ersten Messsequenz eine gleiche Eigenschaft aufweisen, während sie unter einer anderen, von der ersten lediglich in Parametern wie Intensität, Reihenfolge oder Dauer von Auslesepulsen verschiedenen, Messsequenz andere Eigenschaften aufweisen können. Diese Eigenschaft ist insbesondere für die Verwendung als Echtheitsmerkmal in einem Wertdokument vorteilhaft. Das Wertdokument kann einen sogenannten authentischen OSP als Echtheitsmerkmal enthalten. Einem Fälscher kann es zwar möglich sein, einen nachgestellten OSP zu generieren, der unter der ersten Messsequenz dieselben Eigenschaften wie der authentische OSP aufweist. Jedoch kann anhand der zweiten Messsequenz nachgewiesen werden, dass der nachgestellte OSP nicht dem authentischen OSP entspricht.

Bevorzugt weist der hier beschriebene OSP Nichtkommutativität für unterschiedliche Messprozesse auf, das heißt, die Reihenfolge der Messprozesse ist nicht vertauschbar. Beispielsweise wird der OSP mit einem ersten und einem zweiten Messprozess ausgelesen. Hierbei ist es möglich, dass der erste Messprozess das System derart beeinflusst, dass das Ergebnis des zweiten Messprozesses von dem ersten Messprozess abhängt. Eine Änderung der Reihenfolge der Messprozesse kann dann zu einem anderen Messergebnis führen. Ein potentieller Fälscher muss somit für eine Nachstellung des authentischen OSP die für die Echtheitsbewertung verwendeten Messprozesse und die Abfolge in der Messsequenz kennen. Dies erschwert die Fälschung und Nachstellung des OSP erheblich.

Beispiele für charakteristische Gedächtniseigenschaften sind im Folgenden zusammen mit bevorzugten Ausführungsformen des OSP beschrieben. Dabei sind die Werte der Gedächtniseigenschaften abhängig von der verwendeten Messsequenz und/oder den Umgebungsbedingungen, was in der Anwendung die enge Verknüpfung von Echtheitsmerkmal und Echtheitsnachweisverfahren erzeugt. Neben den benannten Gedächtniseigenschaften können auch andere Messgrößen, wie beispielsweise die Krümmung der Auslesekurve als Echtheitskriterium herangezogen werden.

Auslesegeschwindigkeit des OSP

Im OSP beschreibt diese Größe, wie schnell sich ein Stoff auslesen lässt bzw. wie schnell die Fallenzentren von gespeicherten Ladungsträgern entleert werden. Sie lässt sich als relative Abnahme der OSL zwischen zwei gleichen Auslesepulsen beschreiben. Alternative Beschreibungen der Auslesegeschwindigkeit betrachten beispielsweise die Steigung der Auslesekurve an bestimmten Punkten (z.B. am Anfang, in der Mitte oder am Ende der Auslesekurve). Für gepulste Auslesesequenzen können dazu beispielsweise die maximalen oder mittleren Signalwerte unter dem jeweiligen Auslesepuls der Nummer des jeweiligen Auslesepulses zugeordnet werden und so die Auslesekurve parametrisieren.

Zum Beispiel beeinflussen Materialeigenschaften die Auslesegeschwindigkeit, nämlich Stimulierbarkeit durch den Auslesepuls und Ladungstransporteigenschaften, sowie unterschiedliche Wahrscheinlichkeiten dafür, dass die stimulierten Ladungsträger in (anderen) Fallenzentren gefangen werden. Weiterhin beeinflussen Parameter des Auslesepulses, wie Wellenlänge oder Pulsenergie, die gemessene Auslesegeschwindigkeit.

Aufladegeschwindigkeit des OSP

Im OSP beschreibt diese Größe, wie schnell bzw. effektiv sich ein Stoff aufladen lässt. Sie lässt sich beispielsweise als relative Zunahme der OSL zwischen zwei gleichen Aufladepulsen beschreiben.

Die Aufladegeschwindigkeit kann beispielsweise wie folgt gemessen werden:

- Definition eines festen Auslesepulses und eines festen Aufladepulses;
- Präparation des OSP, so dass er keine OSL zeigt (z.B. durch wiederholtes Beaufschlagen mit dem definierten Auslesepuls);

- Beaufschlagen mit dem definierten Aufladepuls;
- Beaufschlagen mit dem definierten Auslesepuls und Messung einer ersten Intensität der OSL.
- Erneute Präparation des OSP, so dass er keine OSL zeigt (z.B. durch wiederholtes Beaufschlagen mit dem definierten Auslesepuls);
- Wenigstens zweimaliges Beaufschlagen mit dem definierten Aufladepuls;
- Beaufschlagen mit dem definierten Auslesepuls und Messung einer zweiten Intensität der OSL.
- Die Aufladegeschwindigkeit ergibt sich als Quotient der zweiten und der ersten Intensität.

Die Aufladegeschwindigkeit hängt von Materialeigenschaften des OSP wie beispielsweise den Ladungstransporteigenschaften oder der intrinsischen Lumineszenz ab, sowie von Parametern der Aufladepulse wie beispielsweise Wellenlänge oder Pulsenergie.

Gedächtnistiefe

Die Gedächtnistiefe eines OSP gibt an, wie lange ein Ereignis unter Beleuchtung mit einem Ausleselicht zurückliegen kann, um das Ergebnis einer Messung signifikant zu beeinflussen. Bei einem OSP kann die Gedächtnistiefe Spannen von wenigen Mikrosekunden bis zu vielen Stunden abdecken.

In der Umsetzung wird beispielsweise die Gedächtnistiefe eines OSP unter einer kontinuierlichen Beleuchtung mit einem Ausleselicht betrachtet. In dieser Umsetzung wird der OSP mit einem definierten Aufladepuls aufgeladen. Vorzugsweise wird hierzu ein langanhaltender intensiver Puls (z. B. Leistung >1 W, Beleuchtungsfläche 1 mm$^2$ und Dauer 20 s) bei geeigneter Wellenlänge (z. B. 450 nm) eingesetzt. Dann wird der OSP solange mit einem kontinuierlichen Ausleselicht beaufschlagt, bis die Auslesekurve unter eine vordefinierte Schwelle relativ zu ihrem Ausgangswert abgefallen ist (beispielsweise unter 1% des maximalen Signals). Beispielsweise kann die benötigte Zeitspanne als Messwert für die Gedächtnistiefe herangezogen werden. Da die Form der der Messung zugrundeliegenden Auslesekurve nicht in die Definition der Gedächtnistiefe eingeht, hängen Auslesegeschwindigkeit und Gedächtnistiefe zwar zusammen, beschreiben aber unterschiedliche Aspekte des Gedächtnisses eines OSP.

Persistenz

Die Persistenz eines OSP gibt an, wie lange ohne Beleuchtung aber unter dem Einfluss der Umgebung ein Ereignis im OSP gespeichert werden kann. Im OSP kann sich die Fallenbesetzung mit der Zeit ändern (sogenanntes "Fading"), da nichtstrahlende Relaxationspfade auch bei Raumtemperatur zugänglich sind. Als mögliches Verfahren zur Messung der Persistenz kann nach einem Aufladepuls die Wartezeit zum ersten Puls der nachfolgenden Auslesesequenz variiert werden. Beispielsweise wird die Wartezeit zwischen 1 ms und 100 ms variiert. Aus dem Vergleich der Auslesekurven für unterschiedliche Wartezeiten lassen sich geeignete Maße der Persistenz wie die Intensitätspersistenz (Stabilität des Signalmaximums der Auslesekurve gegenüber der Wartezeit) oder Geschwindigkeitspersistenz (Stabilität der Auslesegeschwindigkeit gegenüber der Wartezeit) bestimmen. Dazu kann der OSP beispielsweise vor jedem Aufladen so präpariert werden, dass er keine messbare OSL zeigt (beispielsweise durch wiederholtes Beaufschlagen mit einem Auslesepuls).

Bevorzugt weist der OSP bei den verwendeten Aufladepulsen und den gewählten Umweltbedingungen eine lange Persistenz auf. Hierdurch können das Aufladen und das Auslesen zeitlich und räumlich entkoppelt werden. Alternativ ist es möglich, dass eine kurze Persistenz des Gedächtnisses gewählt wird, um das Aufladen und das Auslesen zeitlich und räumlich zu koppeln, wodurch eine schnelle maschinelle Bearbeitung ermöglicht und eine Fälschung weiter erschwert wird.

In einer weiteren bevorzugten Ausführung sind OSP und Aufladepuls(e) so gewählt, dass die Persistenz des Gedächtnisses an die Bearbeitungsgeschwindigkeit angepasst ist, d. h., dass die Persistenz des Gedächtnisses so eingestellt ist, dass das Gedächtnis ab einer Wartezeit von 50 $\mu$s, besonders bevorzugt ab einer Wartezeit von 20 $\mu$s, nach dem Aufladen für die Dauer der Bearbeitung stabil ist.

Vertauschbarkeit (auch als Kommutativität bezeichnet)

Die Vertauschbarkeit gibt an, ob zwei Messprozesse an einem OSP abhängig von ihrer Reihenfolge verschiedene Ergebnisse liefern. Für OSP sind grundsätzlich zwei Messvorgänge nicht notwendigerweise vertauschbar. Dies lässt sich leicht zeigen, wenn als Folge von Messvorgängen ein Aufladepuls und ein Auslesepuls betrachtet werden. Die jeweiligen Messsignale unter der Abfolge Aufladepuls-Auslesepuls unterscheiden sich von jenen unter der Abfolge Auslesepuls-Aufladepuls. Nimmt man zusätzlich an, dass der Messprozess einen Aufladepuls und zwei Auslesepulse umfasst, hängt das Messergebnis für den zweiten Auslesepuls davon ab, in welcher Reihenfolge der Aufladepuls und der erste Auslesepuls durchgeführt wurden. Auch bei der Durchführung desselben Messprozesses (etwa zwei Auflade- oder Auslesepulse hintereinander) ergibt sich im Allgemeinen nicht dasselbe Signal. Dies bedeutet, dass Speicherleuchtstoffe gedächtnisbehaftete Systeme darstellen, also das Messergebnis stark von der Vorgeschichte abhängt.

Kontinuität des Gedächtnisses

Bei einem OSP beschreibt diese Größe, inwieweit ein Ereignis in der Gegenwart die Erinnerung an vergangene Ereignisse überschreiben kann. Beispielsweise stellt eine zeitweilige Unterbrechung einer andernfalls gleichmäßigen Auslesesequenz solch ein Ereignis dar. Eine Messung der Kontinuität des Gedächtnisses lässt sich in diesem Fall beispielsweise dadurch erzielen, dass ein OSP mit einem Aufladepuls aufgeladen und anschließend mit einer gleichmäßigen Folge aus fünf gleichen Auslesepulsen ausgelesen wird. Dann wird für eine Zeitspanne, die der Dauer der vorherigen Auslesesequenz aus fünf Pulsen entspricht, der OSP nicht beleuchtet. Anschließend wird der OSP wiederum mit der gleichen Folge von fünf Auslesepulsen ausgelesen. Zur Bewertung der Kontinuität des Gedächtnisses wird herangezogen, ob sich die beiden Auslesekurven vor und nach der Unterbrechung zu einer einzigen, kontinuierlichen Auslesekurve zusammensetzten lassen.

Lassen sich die Teilstücke vor und nach der Unterbrechung kontinuierlich zusammensetzen, wird das Gedächtnis als kontinuierlich unter dieser Auslesesequenz bezeichnet. Treten bei einer solchen Zusammensetzung Stufen in der Auslesekurve oder Änderungen in der Auslesegeschwindigkeit auf, wird das Gedächtnis unter dieser Auslesesequenz als nicht kontinuierlich bezeichnet. Dabei sind auch die Art und Form der Stufe (zu großes oder zu kleines Signal verglichen mit dem Soll, ansteigend oder verstärkt abfallend) charakteristisch. Solche Abweichungen von einem kontinuierlichen Gedächtnis können beispielsweise durch parasitäre Prozesse, wie Wiedereinfangen der Ladungsträger in Fallenzuständen, direkte Relaxation oder tunnelnde Relaxation entstehen und bereits auf der Zeitskala ab rund 10 $\mu$s messbar auftreten. Ein mögliches Kontinuitätsmaß (also ein aus der Messung abgeleiteter Messwert) vergleicht unmittelbar nach der Unterbrechung die geschätzte Fortsetzung der Auslesekurve mit der unter der gegebenen Auslesesequenz tatsächlich gemessenen. Die Kontinuität gibt somit an, wie stark ein Ereignis die "Erinnerung", d.h. die Erkennbarkeit vergangener Messprozesse, beeinflussen kann.

Statt einer Unterbrechung kann auch ein anderes Ereignis wie beispielsweise ein weiterer andersartiger Auslesepuls, ein Aufladepuls oder auch eine vorübergehende Temperaturänderung betrachtet werden.

In einer besonders bevorzugten Ausprägung werden der OSP sowie die Auslesesequenzen so ausgewählt, dass das Gedächtnis des gewählten optischen Speicherleuchtstoffs unter den gewählten Auslesesequenzen im Wesentlichen kontinuierlich ist. Beispielsweise weicht für eine Unterbrechung von 100 $\mu$s die maximale OSL-Intensität während des ersten Auslesepulses nach der Unterbrechung um weniger als 10% von der minimalen OSL-Intensität während des letzten Auslesepulses vor der Unterbrechung ab.

Sensitivität

Die Sensitivität eines OSP gibt an, wie sich die OSL mit den Parametern eines Messprozesses ändert. Beispielhaft wurde dies oben für Abhängigkeit von der Wellenlänge von Aufladepulsen (Aufladespektrum) und Auslesepulsen (Auslesespektrum) beschrieben. Alternativ kann auch die Abhängigkeit der optisch stimulierten Lumineszenz von weiteren Parametern der Auslesepulse, wie beispielsweise Pulsdauer oder Pulsintensität, gemessen werden. Dazu wird beispielsweise der OSP durch einen Aufladepuls aufgeladen und die Auslesekurve unter einer ersten Auslesesequenz bestimmt, für die insbesondere der erste Auslesepuls als Referenz-Auslesepuls benannt wird. Dann wird der OSP mit demselben Aufladepuls wie zuvor wieder aufgeladen und die Auslesekurve unter einer zweiten Auslesesequenz bestimmt, die als ersten Auslesepuls wiederum den Referenz-Auslesepuls enthält und deren weitere Auslesepulse sich von denen der ersten Auslesesequenz nur in der Intensität unterscheiden. Vorzugweise wird der genannte Unterschied in der Intensität als prozentuale Skalierung für alle betroffenen Auslesepulse gleich ausgelegt. Wurde der Aufladepuls so gewählt, dass unter dem Referenz-Auslesepuls der ersten und dem Referenz-Auslesepuls der zweiten Auslesesequenz die gleichen Signalwerte erzielt werden, lässt sich aus den Auslesekurven unter der ersten und unter der zweiten Auslesesequenz die Sensitivität des OSP bezüglich der Intensität des Ausleselichts ermitteln. Beispielsweise kann die Sensitivität des OSP bezüglich der Intensität des Ausleselichts als Summe über die quadratische Differenz der Signalwerte der ersten und zweiten Auslesekurve bestimmt werden. Je größer dieser Wert ausfällt, desto größer ist die Sensitivität des OSP unter einer Intensitätsänderung.

Assoziativität

Assoziativität bei einem OSP beschreibt, wie verschiedene Messprozesse bei gleichzeitiger oder aufeinanderfolgender Einwirkung im Vergleich zu der Situation, in der jeweils nur einer der Messprozesse wirkt, die OSL beeinflussen. Beispielsweise hängt die Intensität der OSL davon ab, ob zwei unterschiedliche Auslesepulse nacheinander auf den Stoff einwirken oder zeitlich überlappen.

Gedächtnisstärke

Die Gedächtnisstärke des OSP beschreibt, wie stark ein erster Messprozess einen späteren zweiten Messprozess beeinflusst. Im Vergleich zur Gedächtnistiefe, welche eine Zeitdauer betrifft, betrifft die Gedächtnisstärke eine quantitative oder qualitative Beeinflussung des wenigstens einen nachfolgenden Messprozesses. Um die Gedächtnisstärke zu bewerten, kann beispielsweise der OSP mit einem definierten Aufladepuls. (z. B. Leistung 0.3 W, Beleuchtungsfläche 4 mm$^2$ und Dauer 20 ms) bei geeigneter Wellenlänge (z. B. 450 nm) aufgeladen werden. Dann wird der OSP solange mit einem kontinuierlichen Ausleselicht beaufschlagt (z. B. Peak-Wellenlänge 650 nm, Leistung 450 mW, fokussierter Strahl), bis die Auslesekurve unter eine vordefinierte Schwelle relativ zu ihrem Ausgangswert abgefallen ist (beispielsweise unter 20% des maximalen Signals). Die Auslesekurve wird dann mit einer Potenzfunktion des Typs

$$I(t) = (a + bt)^{-\frac{1}{b}} + c$$

angepasst. Während der Parameter a mit der Gedächtnistiefe in Verbindung steht, bietet die Größe $\frac{1}{b}$ ein Maß für Gedächtnisstärke: Misst man zwei unterschiedliche Stoffe wie zuvor angegeben und bestimmt für dieselben Messbedingungen aus den Anpassungen jeweils die Werte der Größe $\frac{1}{b}$, so zeigt der Stoff mit größerem Wert $\frac{1}{b}$ auch die höhere Gedächtnisstärke. Eine Erhöhung der Gedächtnisstärke kann für den Echtheitsnachweis vorteilhaft sein, da sie mit einem erhöhten Einfluss des Gedächtnisses des OSP auf die Messung einhergeht, was wiederum die enge Verknüpfung von Eigenschaft und Echtheitsnachweis fördert.

Neben den beispielhaft genannten Gedächtniseigenschaften können die hier beschriebenen OSP weitere vorteilhafte Eigenschaften aufweisen. Dabei ist es von Vorteil, Stoffe mit unterschiedlichen Ausprägungen der vorteilhaften Eigenschaften bereitzustellen, weil damit eine Gruppe von unterscheidbaren Stoffen als Merkmalssystem vorliegt, aus der dann für eine konkrete Anwendung ein oder mehrere Stoffe ausgewählt werden können. Gemäß zumindest einer Ausführungsform ist der OSP durch Lichteinstrahlung auslesbar ausgebildet. Mit anderen Worten, der OSP weist ein Auslesespektrum auf, das im sichtbaren Bereich, im UV-Bereich und/oder im IR-Bereich des elektromagnetischen Spektrums liegt.

In einer Ausführungsform weist das Auslesespektrum des hier beschriebenen OSP ein Maximum in einem Wellenlängenbereich von wenigstens 360 nm bis höchstens 1200 nm auf, bevorzugt weist es ein lokales Maximum in einem Wellenlängenbereich von wenigstens 380 nm bis höchstens 420 nm auf. Dieser Wellenlängenbereich liegt sowohl unterhalb der bevorzugten Peak-Wellenlänge des Aufladepulses von 450 nm als auch gegebenenfalls unterhalb des bevorzugten Emissionsmaximums der OSL bei 560 nm.

Ein weiterer bevorzugter Wellenlängenbereich eines Maximums des Auslesespektrums liegt zwischen 500 nm und 1200 nm. In einer weiteren Ausprägung weist das Auslesespektrum des OSP ein lokales Maximum im orange-roten Spektralbereich von 600 nm bis 640 nm auf und fällt mit höheren Wellenlängen ab, d.h. es tritt kein weiteres lokales Maximum auf. In einer weiteren Ausprägung weist das Auslesespektrum ein lokales Maximum im Bereich von 570 nm bis 610 nm und ein weiteres, lokales Maximum im Bereich von 850 nm bis 890 nm auf. In einer weiteren Ausprägung weist das Auslesespektrum ein lokales Maximum im Bereich von 550 nm bis 590 nm auf und fällt bei einer Wellenlänge von 870 nm unter einen Wert von 20 % des Maximums. In diesen Fällen liegen die lokalen Maxima des Auslesespektrums bei längeren Wellenlängen als die bevorzugte Peak-Wellenlänge des Aufladepulses von 450 nm und das bevorzugte Emissionsmaximum der OSL bei 560 nm.

Die zuvor genannten bevorzugten Wellenlängenbereiche des Maximums des Auslesespektrums können mit mehreren unterscheidbaren Stoffen korrespondieren, die beispielsweise zu einem Merkmalssystem zusammengefasst werden können. Insbesondere kann vorgesehen sein, dass mehrere Stoffe in einem System verwendet werden, wobei wenigstens zwei Stoffe unterschiedliche Auslesespektren und/ oder Aufladespektren aufweisen. Somit können mehrere Spektralbereiche Anwendung finden. Es wurde herausgefunden, dass die genannten Spektren sich besonders gut technisch verwirklichen lassen, beispielsweise ohne besondere Sicherheitsvorkehrungen treffen zu müssen. Darüber hinaus können viele der hier beschriebenen Stoffe in den genannten Spektralbereichen effizient aufgeladen bzw. ausgelesen werden.

Die OSL des OSP weist in einer weiteren, bevorzugten Ausführungsform ein Emissionsmaximum in einem Wellenlängenbereich von wenigstens 500 nm bis höchstens 600 nm auf, besonders bevorzugt in einem Wellenlängenbereich von 550 nm bis 570 nm. Die OSL weist somit ein Emissionsmaximum im grün-gelben Bereich des elektromagnetischen Spektrums auf und kann damit sowohl von Auflade- als auch von Ausleselicht durch technische Maßnahmen (z.B. Filterung) sauber getrennt werden. Die Wellenlängen des Emissionsspektrums können sich dabei sowohl in den blauen als auch den roten Spektralbereich erstrecken.

Es können zusätzliche Banden im Emissionsspektrum der OSL und/oder im Auslesespektrum auftreten, die insbesondere von den kodotierten Ionen herrühren können. Eine Lumineszenz und/oder Anregung der Kodotierung kann allerdings in Bezug auf die Speicherung von Ladungsträgern einen weiteren Energiedissipationskanal darstellen, was sich nachteilig auf die Intensität der OSL auswirken kann. Bei einem Maximum kann es sich hierbei und im Folgenden allgemein um ein lokales und/oder ein globales Maximum handeln.

Ein zum Auslesen des OSP geeignetes Licht weist bevorzugt eine Peak-Wellenlänge im Wellenlängenbereich des Auslesespektrums auf, besonders bevorzugt bei dem Maximum des Auslesespektrums. Eine Peak-Wellenlänge ist hierbei und im Folgenden die Wellenlänge, bei der die spektrale Verteilung des Lichts wenigstens ein lokales Maximum, bevorzugt ein globales Maximum, aufweist.

Gemäß zumindest einer Ausführungsform weist der optische Speicherleuchtstoff wenigstens eine der folgenden Eigenschaften auf:

- Abklingzeit der intrinsischen Lumineszenz von höchstens 100 $\mu$s, bevorzugt höchstens 25 $\mu$s;
- Auslesespektrum mit zumindest zwei lokalen Maxima;
- Aufladespektrum mit einem Maximum bei einer Wellenlänge von wenigstens 300 nm, bevorzugt von wenigstens 420 nm bis höchstens 500 nm.

Das Auslesespektrum kann zumindest zwei Maxima aufweisen. Das Auslesespektrum hat somit eine deutliche bzw. ausgeprägte spektrale Struktur. Beispielsweise liegt ein erstes Maximum in einem Wellenlängenbereich von wenigstens 380 nm bis höchstens 420 nm und ein zweites Maximum in einem Wellenlängenbereich von wenigstens 500 nm bis höchstens 1200 nm.

Der OSP kann mit Licht, dessen Wellenlänge wenigstens im UV-Bereich liegt, bevorzugt mit blauem Licht, aufladbar sein. Hierdurch kann die Verwendung von hochenergetischer Röntgenstrahlung vermieden werden. Besonders bevorzugt ist der OSP mit Licht einer Peak-Wellenlänge von 440 nm bis 470 nm aufladbar.

Gegenüber anderen potentiell einsetzbaren optischen Speicherleuchtstoffen können die hier beschriebenen optischen Speicherleuchtstoffe weitere Eigenschaften aufweisen, die insbesondere für die Anwendung als Sicherheitsmerkmal vorteilhaft sind.

So zeigt der hier beschriebene OSP bevorzugt eine (messbare) intensive Emission, wodurch eine bereits geringe Konzentration des OSP für eine Echtheitsbewertung ausreichend ist. Beispielsweise kann ein erfindungsgemäßer OSP bereitgestellt werden, für den höchstens eine Konzentration von 1 Gewichtsprozent in einem Papier für einen Echtheitsnachweis an einem Wertdokument erforderlich ist. Hierdurch werden die Nachteile, wie zum Beispiel langsame Abklingzeit und schwächere Intensität von alternativen Stoffen, wie beispielsweise Oxidsulfiden der Art $Y_2O_2S$:(Eu, Ti, Mg) gelöst.

Der hier beschriebene OSP ist zudem chemisch stabil und weist insbesondere eine hohe chemische Stabilität und/oder Beständigkeit gegen Wasser, Lauge und Säure auf. Ferner ist der OSP stabil gegen eine Zersetzung durch Licht, beispielsweise mit einer Lichtstabilität entsprechend einer Wollskala von wenigstens 4. Hierdurch können Nachteile von alternativen Leuchtstoffen wie z. B. Erdalkalisulfiden wie (Ca,Sr)S:Eu,Sm, Zinksulfiden, wie ZnS:(Cu,Cl), und/oder Erdalkalialuminaten wie $SrAl_2O_4$:Eu.Dy gelöst werden.

Gegenüber einem Chemikalientest (Test auf Stabilität z. B. gegen Feuchtigkeit, Säuren, Laugen und anderen Chemikalien wie z.B. Lösemitteln, Oxidationsmittel oder Waschmitteln) gilt ein hier beschriebener OSP insbesondere dann als chemisch stabil, wenn die OSL-Intensität des applizierten OSP nach dem Test mindestens 60%, bevorzugt mindestens 90% des Wertes vor dem Test erreicht. In den Tests wird der OSP zur Markierung eines Gegenstandes (z. B. Dokument oder Banknote) eingesetzt, z. B. bei einer Korngröße (D99) von 5$\mu$m in Papiersubstrat bei einer Konzentration von 0.5 Gewichtsprozent. Im Säuretest wird der markierte Gegenstand für 30 Minuten in Kontakt mit einer sauren Lösung (Salzsäure) bei pH$\leq$0 gebracht. Analog wird in einem Laugentest der markierte Gegenstand für 30 Minuten in Kontakt mit einer basischen Lösung (Natronlauge) bei pH$\geq$12 gebracht. Um die Stabilität gegenüber Wasser zu testen, liegt der markierte Gegenstand 24 Stunden in deionisiertem Wasser. In einem anderen Test wird der markierte Gegenstand für 4 Stunden Wasserdampf bei 90°C ausgesetzt. In analoger Weise können weitere Tests definiert werden. Hinsichtlich Feuchtigkeit, Säure und Lauge weisen die hier beschriebenen optischen Speicherleuchtstoffe eine hohe Stabilität auf (d. h. sie bestehen die genannten Tests), wohingegen andere Speicherleuchtstoffe wie z. B. Erdalkalisulfide, Zinksulfide oder auch Erdalkalialuminate ohne aufwendige Schutzmaßnahmen als instabil zu betrachten sind.

Der hier beschriebene OSP ist bevorzugt nicht gesundheitsschädlich und weist keine gesundheitsschädlichen Zersetzungsprodukte auf.

Der hier beschriebene OSP weist bevorzugt eine schnelle Auslesbarkeit (geringe Gedächtnistiefe bei gleichzeitig hoher Gedächtnisstärke) auf. Beispielsweise reduziert sich das gemessene OSL-Signal bei einem kontinuierlichen Auslesepuls (fokussierter Laserstrahl) mit einer Peak-Wellenlänge von 638 nm und einer nominellen Lichtleistung von 400 mW in weniger als 2 ms auf 50%. Hierdurch ergeben sich insbesondere im Vergleich zu Erdalkalialuminaten wie $SrAl_2O_4$:Eu,Dy Vorteile. Zum Vergleich wird an einem typischen Nachleuchtstoff (Strontiumaluminat-Leuchtstoff, Nachleucht-Pigment Blau von Kremer Pigmente) unter denselben Bedingungen diese 50% Schwelle erst nach einer Zeit von mehr als 7ms erreicht.

Der hier beschriebene OSP weist zudem bevorzugt ein hinreichend geringes Nachleuchten insbesondere im sichtbaren Spektralbereich auf. Somit wird eine unerwünschte Sichtbarkeit vermieden und eine Messbarkeit des OSL-Signals sichergestellt, da eine geringe Überlagerung des OSL-Signals mit dem Nachleuchtsignal gewährleistet werden kann.

Für die technische Anwendbarkeit ist es vorteilhaft, zwischen den unterschiedlichen Typen von Fallenzuständen zu unterscheiden. Fallenzustände, die nahe am Leitungsband liegen, führen zu Nachleuchten, während die für OSL relevanten Fallenzustände so tief (entfernt zum Leitungsband) liegen, dass sie durch die thermische Energie bei Raumtemperatur nicht signifikant geleert werden. Bei einem Stoffdesign kann somit gezielt durch die Defektstruktur, d.h. zum Beispiel über Abweichungen von der ladungsneutralen Stöchiometrie oder Zudotierungen weiterer Fremdionen die Art, Menge und Tiefe der Fallenzustände beeinflusst werden. Insofern beschreiben Nachleuchten und OSL unterschiedliche und technisch gezielt adressierbare Phänomene.

Die genaue Anpassung des hier beschriebenen Speicherleuchtstoffs kann zudem erlauben, die relative Intensität der intrinsischen Lumineszenz im Verhältnis zu optisch stimulierter Lumineszenz sowie Sättigungsverhalten und dynamisches Verhalten des Leuchtstoffes hinsichtlich Nachleuchten, Auslesegeschwindigkeit und Persistenz anzupassen. Dazu werden zum Beispiel die Cer-Dotierkonzentration sowie Kodotierungen, die Abweichungen von einer stöchiometrischen Formulierung sowie gegebenenfalls das Konzentrationsverhältnis von Al/Ga beziehungsweise von Gd/anderen Seltenerd-Elementen angepasst.

In wenigstens einer Ausführungsform des OSP ist Ln Lanthan (La), Lutetium (Lu) oder Yttrium (Y), wobei zudem gilt: $y > 0$. Vorzugsweise ist $y > 0.0005$ besonders bevorzugt ist $y > 0.001$. Überraschend wurde festgestellt, dass durch Kombination von Gd mit einem der Stoffe La, Lu oder Y die Intensiät der OSL um ein Vielfaches, teilweise mehr als zehnfach, erhöht wird. Vorzugsweise gilt: $x+y \geq 3.0$, besonders bevorzugt gilt: $x+y > 3.0$.

In einer Ausgestaltung des OSL gilt: $p > 0$, vorzugsweise $p > 0.0005$ und besonders bevorzugt ist $p > 0.001$. Die Dotierung mit Ce bewirkt einen Punktdefekt zum Bilden eines Leuchtzentrums.

Gemäß zumindest einer Ausführungsform des OSP ist Ln Lanthan (La) oder Yttrium (Y) und Q Zirconium (Zr) oder Zinn (Sn). Ferner gilt: $0.002 \leq p \leq 0.08$; $0.002 \leq q \leq 0.05$; $r = 0$; $k = 0$; $n \leq 3$; und $t \leq 0.05$. Bevorzugt sind die Kombinationen La und Zr, La und Sn sowie Y und Sn. Beispielsweise ermöglicht die Verwendung von La eine Erhöhung der OSL-Intensität des OSP, durch die Verwendung von Zr kann beispielsweise eine Erhöhung der Gedächtnisstärke des OSP erreicht werden. Zudem kann ein OSP mit dieser Zusammensetzung deutliche Nichtkommutativität aufweisen. Beispielsweise kann durch die Verwendung von Sn ein strukturiertes Auslesespektrum mit Auslesbarkeit im nahen UV, insbesondere bei Wellenlängen deutlich kleiner als die Emissionswellenlänge bereitgestellt werden.

Der OSP kann somit die folgende Zusammensetzung aufweisen:

$$(Gd_x[La,Y]_y)(Ga_mAl_n)O_{12\pm d}{:}Ce_p[Zr,Sn]_q\ T_t. \qquad (2)$$

Hierbei und im Folgenden bedeutet die eckige Klammer [X1, X2], dass eines der beiden Elemente vorhanden ist.

Gemäß zumindest einer Ausführungsform des OSP ist Ln Lanthan (La) oder Yttrium (Y) und Q Zirconium (Zr). Ferner gilt: $p = 0$; $0.002 \leq q \leq 0.02$; $r = 0$; $k = 0$, $n \leq 3$; und $t \leq 0.05$. Besonders bevorzugt ist für Ln Lanthan (La). Bei dieser Ausführungsform ist somit insbesondere kein Cer zudotiert wodurch beispielsweise eine Erhöhung der Persistenz erreicht werden kann.

Der OSP kann somit die folgende Zusammensetzung aufweisen:

$$(Gd_xLa,Y]_y)(Ga_mAl_n)O_{12\pm d} : Zr_q\ T_t. \qquad (3)$$

Gemäß zumindest einer Ausführungsform des OSP ist Ln Lanthan (La) oder Yttrium (Y) und Q Zirconium (Zr) oder Molybdän (Mo). Ferner ist R Bismut (Bi). Zudem gilt: $0.005 \leq p \leq 0.08$; $0.002 \leq q \leq 0.05$; $0.002 \leq r \leq 0.05$; $k = 0$, $n \leq 3$; und $t \leq 0.05$. Bevorzugt sind die Kombinationen Y und Zr, La und Zr sowie Y und Mo. Für einen OSP mit einer derartigen Zusammensetzung liegt beispielsweise ein deutlich strukturiertes Auslesespektrum mit guter Auslesbarkeit im nahen Infrarot (NIR) vor.

Der OSP kann somit die folgende Zusammensetzung aufweisen:

$$(Gd_x[La,Y]_y) (Ga_mAl_n)O_{12\pm d} : Ce_p [Zr,Mo]_q\ Bi_r\ T_t. \qquad (4)$$

Gemäß zumindest einer Ausführungsform des OSP ist Ln Lanthan (La) und R ist Thulium (Tm) oder Ytterbium (Yb). Ferner ist Q Silber (Ag) und/oder Zirconium (Zr). Es gilt zudem: $0.005 \leq p \leq 0.08$, $0.002 \leq r \leq 0.05$; $k = 0$, $n \leq 3$; und $t \leq 0.05$. Bevorzugt ist $q=0$. Ein derartiger OSP zeigt beispielsweise eine Erhöhung der Intensität der optisch stimulierten Lumineszenz und eine Erhöhung der Gedächtnistiefe.

Der OSP kann somit die folgende Zusammensetzung aufweisen:

$$( Gd_xLa_y ) ( Ga_mAl_n)O_{12\pm d}:Ce_p [Ag,Zr,(AgZr)]_q [Tm,Yb]_r T_t. \qquad (5)$$

Alternativ ist die Kombination La und Q=(Ag Zr) und r=0 möglich. Ein derartiger OSP zeigt beispielsweise eine Erhöhung der Intensität der optisch stimulierten Lumineszenz und eine Erhöhung der Persistenz.

Der OSP kann somit die folgende Zusammensetzung aufweisen:

$$( Gd_xLa_y ) ( Ga_mAl_n ) O_{12\pm d} : Ce_p (AgZr)_q T_t. \qquad (6)$$

Gemäß zumindest einer Ausführungsform des OSP ist Ln Lanthan (La) oder Yttrium (Y), Q Zirconium (Zr), Molybdän (Mo) oder Zinn (Sn), und R Bismut (Bi). Es gilt: $0.1 \leq y \leq 1$; $0.005 \leq p \leq 0.08$; $0.002 \leq q \leq 0.05$; $k=0$; $t \leq 0.05$, $0 \leq n \leq 3.5$; $1.5 \leq m \leq 5$; und $m+n+5q/6 = 5$; sowie $2.95 \leq x + y + p + r + q/6 \leq 3.1$. Bevorzugt sind die Kombinationen La und Zr mit $r = 0$, La und Sn mit $r = 0$ sowie Y und Sn mit $r = 0$. Ferner sind die Kombinationen $Q = Mo$ und $R = Bi$ ($r \neq 0$) sowie $Q = Zr$ und $R = Bi$ ($r \neq 0$), jeweils mit La oder Y, bevorzugt. Beispielsweise weist ein derartiger Stoff ein strukturiertes Auslesespektrum mit einer Erhöhung der Auslesbarkeit im nahen Infrarot (NIR) und/oder eine Verringerung der Gedächtnistiefe und/oder eine Erhöhung der Gedächtnisstärke auf.

Der OSP kann somit die folgende Zusammensetzung aufweisen:

$$( Gd_x[La,Y]_y ) ( Ga_mAl_n ) O_{12\pm d} : Ce_p [Zr,Mo,Sn]_q Bi_r T_t ; \qquad (7)$$

Gemäß zumindest einer Ausführungsform des OSP ist Q Molybdän (Mo) oder Zirconium (Zr), mit $0.005 \leq q \leq 0.05$; und $t = 0$ und/oder $r = 0$. Bevorzugt ist hierbei Ln Lanthan (La) oder Yttrium (Y) und R Bismut (Bi).

Der hier beschriebene OSP lässt sich beispielsweise wie im Folgenden beschrieben herstellen. Die Rohstoffe (Ausgangsstoffe) sind jeweils kommerziell erwerblich.

Für die Herstellung eignen sich beispielsweise im Allgemeinen übliche keramische Sinterverfahren. In einem solchen Verfahren werden die pulverförmigen Ausgangsstoffe in den nötigen Masseanteilen und gegebenenfalls mit einem geeigneten Flussmittel (Flux) wie beispielsweise LiF, NaCl, KCl, $Na_2SO_4$ oder $K_2SO_4$ oder ähnlichen, gemischt und in geeignete Schmelztiegel gefüllt. Bei einer Sintertemperatur, die von der Wahl des Flussmittels abhängt, wird der Stoff gesintert. Üblicherweise wählt man oxidische Ausgangsstoffe, die Sintertemperaturen liegen im Bereich von 800°C bis 1700°C und die Brenndauern betragen einige Stunden.

Ein in der Literatur bekanntes alternatives Verfahren beruht auf der exothermen Reaktion von gelösten Nitraten der Ausgangsstoffe mit einem Treibstoff (sogenannte "Combustion Synthesis"). Dazu werden die als Nitrate vorliegenden Ausgangsstoffe in Wasser gelöst. Die gemäß der Formulierung einzusetzenden Mengen werden beispielsweise in ein Becherglas überführt und mit der angepassten Menge Treibstoff, z. B. Carbodihydrazid und/oder Harnstoff, versetzt. Dann wird der so gebildete Ansatz erwärmt und zum Sieden gebracht, wobei das Wasser verdampft und sich ein entstehendes schaumiges Gel bis zu einer Zündtemperatur oberhalb von 400°C weiter erhitzt. Durch die Zündung wird eine selbsterhaltende exotherme Reaktion in Gang gesetzt, an deren Ende der Leuchtstoff als fester nanopartikulärer Schaum vorliegt. Auf diese Weise lassen sich auf schnelle Weise Reihenuntersuchungen von Stoffkandidaten durchführen.

Für die weiteren Auswahl- und/oder Anwendungsschritte wird der OSP gegebenenfalls in einem oder mehreren Waschschritten vom Flussmittel gereinigt, durch Mahlen/Sichten auf geeignete Korngröße gebracht und als Pulver, in einem Substrat (zum Beispiel Papier) oder in einem Lack verarbeitet weiter untersucht und gemessen.

Die Verfahrensweise für die Anwendung des OSP als Sicherheitsmerkmal verläuft bevorzugt in analoger Weise, wobei nach dem Mahlen/Sichten ein Abmischen des Stoffes mit weiteren Merkmals-, Tarn- oder/und Hilfsstoffen erfolgen kann, insbesondere auch, um multifunktionale Merkmale zu erhalten, die Merkmalsidentität gegen Nachstellungen zu sichern, das Merkmal für die Einbringung in ein Trägermedium (beispielsweise Lacke oder Substrate wie Papier) anzupassen und/oder die Qualität des Merkmalsstoffes einzustellen. Diese gegebenenfalls abgemischten Stoffe werden dann geeignet in das Trägermedium, beispielsweise Wertdokument, eingebracht.

Es wird ferner ein Verfahren zum Prüfen eines Echtheitsmerkmals angegeben. Das Echtheitsmerkmal umfasst bevorzugt einen hier beschriebenen optischen Speicherleuchtstoff und/oder das Verfahren wird bevorzugt an einem hier beschriebenen optischen Speicherleuchtstoff durchgeführt. Das heißt, sämtliche für den oben angegebenen optischen Speicherleuchtstoff offenbarte Merkmale sind auch für das Verfahren offenbart und umgekehrt.

Das Verfahren umfasst neben dem Bereitstellen des Echtheitsmerkmals die folgenden Schritte:

a) Beaufschlagen des optischen Speicherleuchtstoffs mit einem optischen Aufladepuls und/oder einem optischen Auslesepuls;

b) Erfassen eines Messwertes zu einer optischen Emission, insbesondere intrinsischer oder optisch stimulierter Lumineszenz, des optischen Speicherleuchtstoffs in Reaktion auf den Aufladepuls und/oder den Auslesepuls;

c) Echtheitsbewertung des Sicherheitsmerkmals, insbesondere auf postitiven Nachweis des hier beschriebenen optischen Speicherleuchtstoffs, anhand des Messwerts.

Der Aufladepuls ist bevorzugt Teil einer Aufladesequenz, die das Beaufschlagen mit dem Aufladepuls beinhaltet. Ferner ist der Auslesepuls bevorzugt Teil einer Auslesesequenz, die das Beaufschlagen mit dem Auslesepuls beinhaltet.

Besonders bevorzugt beinhaltet das Verfahren stets ein Beaufschlagen mit einem optischen Auslesepuls. Das Aufladen des OSP kann aktiv durch Beaufschlagen mit einem optischen Aufladepuls erfolgen. Alternativ kann ausgenutzt werden, dass der OSP durch die, insbesondere thermische, Hintergrundstrahlung und/oder durch thermische Anregungen aufgeladen wird. Wenn im Folgenden das Aufladen des OSP besprochen wird, kann damit sowohl das aktive Aufladen mit dem optischen Aufladepuls als auch das passive Aufladen gemeint sein.

Das Beaufschlagen mit dem Aufladepuls bzw. mit dem Auslesepuls beinhaltet insbesondere ein Bestrahlen des OSP mit Licht, bevorzugt mit schmalbandigem Licht. Das Licht weist insbesondere eine Peak-Wellenlänge auf, die im Bereich des Aufladespektrums des OSP bzw. des Auslesespektrums des OSP liegt, bevorzugt bei einem Maximum des Aufladespektrums bzw. des Auslesespektrums. Bevorzugt wird der OSP mit einer oder mehreren Pulsfolgen, d. h. mit einer oder mehreren Messsequenzen, beaufschlagt, wobei eine Messsequenz aus einer Abfolge gleicher oder unterschiedlicher Auflade- und/oder Auslesepulse zusammengesetzt ist. Insbesondere kann sich ein Aufladepuls bzw. ein Auslesepuls durch eine oder mehrere (Peak-)Wellenlängen ausweisen. Ein Aufladepuls bzw. ein Auslesepuls ist bevorzugt ein Laserpuls. Neben der Peak-Wellenlänge, der Pulsform und der Pulsdauer können auch die Strahlgröße und/oder die Leistung des Aufladepulses bzw. des Auslesepulses an der Position des OSP relevante Parameter für das vorliegende Verfahren sein.

In Schritt b) wird der Messwert zu einer optischen Emission des OSP erfasst. Bei dem Messwert handelt es sich bevorzugt um eine Messwertreihe, also mehrere Messwerte. Das Erfassen beinhaltet insbesondere die Detektion der optischen Emission. Die Detektion kann zeitaufgelöst erfolgen. Beispielsweise wird eine Zerfallskurve der optischen Emission gemessen. Die Detektion kann spektral aufgelöst erfolgen, beispielsweise wird ein Spektrum der optischen Emission gemessen.

In Schritt c) erfolgt die Echtheitsbewertung des OSP. Diese umfasst bevorzugt einen Vergleich des Messwerts mit einem in einer Datenbank abgespeicherten Referenzwert. Besonders bevorzugt liefert die Echtheitsbewertung nur unter Anwendung des richtigen Verfahrens, insbesondere der richtigen Verfahrensschritte und/oder der richtigen Abfolge dieser Verfahrensschritte, auf den richtigen optischen Speicherleuchtstoff ein positives Ergebnis. Ein potentieller Fälscher könnte somit nur unter Kenntnis des richtigen Verfahrens überprüfen, ob ein von ihm nachgebauter OSP dem echten OSP entspricht.

Eine Messsequenz weist bevorzugt eine Vielzahl von Aufladepulsen und/oder eine Vielzahl von Auslesepulsen auf. Bevorzugt weisen unterschiedliche Aufladepulse bzw. Auslesepulse jeweils eine gleiche Peak-Wellenlänge und/oder eine gleiche Pulsdauer auf. Es ist möglich, dass der OSP in der Messsequenz zunächst mit einer Vielzahl von Aufladepulsen und anschließend mit einer Vielzahl von Auslesepulsen beaufschlagt wird. Alternativ können sich Aufladepulse und Auslesepulse direkt miteinander abwechseln. Diese verschiedenen Messsequenzen erlauben es, unterschiedliche Eigenschaften des OSP zu messen.

In einer bevorzugten Ausführungsform kann der OSP mit wenigstens einem ersten Auslesepuls und mit wenigstens einem zweiten Auslesepuls, besonders bevorzugt mit mehreren ersten und mehreren zweiten Auslesepulsen, beaufschlagt werden, wobei der erste Auslesepuls und der zweite Auslesepuls unterschiedliche Peak-Wellenlängen und/oder unterschiedliche Pulsdauern aufweisen. Die ersten und zweiten Auslesepulse können abwechselnd auf den OSP gestrahlt werden. So können beispielsweise spektrale oder temporale Sensitivität des OSP oder Vertauschbarkeiten adressiert werden.

Gemäß zumindest einer Ausführungsform des Verfahrens umfasst Schritt b) ein Auswerten des Messwerts zur Bestimmung einer Gedächtniseigenschaft des Speicherleuchtstoffes. Die Echtheitsbewertung in Schritt c) erfolgt anhand des Ergebnisses dieser Auswertung.

Für die Bestimmung der Gedächtniseigenschaft werden bevorzugt eine Auslesekurve, einzelne Signalintensitäten, der Mittelwert und/oder das Maximum der Signalintensität, und/oder das Verhältnis von Signalintensitäten, insbesondere unter Berücksichtigung eines zeitlichen Verlaufs und/oder einer Reihenfolge, ausgewertet.

Beispielsweise wird bei der Auswertung der Messwert mit einem in einer Referenztabelle abgelegten Wert verglichen. Durch die Auswertung des Messwerts kann insbesondere bestimmt werden, auf welche Art und Weise der Messwert gemessen wurde. Bei bekannten Parametern, insbesondere für den Aufladepuls und/oder den Auslesepuls, und/oder bei bekannten Messparametern für die Bestimmung des Messwerts ist es hierdurch möglich, zu ermitteln, welcher OSP vorliegt und/oder auf welche Art der OSP aufgeladen wurde. Ferner ist es möglich, zu bestimmen, ob der OSP bereits mit einer anderen Messsequenz ausgelesen wurde. Die Bestimmung der Gedächtniseigenschaft ermöglicht somit eine Echtheitsbestimmung mit dem OSP.

Gemäß zumindest einer Ausführungsform des Verfahrens umfassen die Schritte a) und b) die folgenden Teilschritte:

a1) Beaufschlagen des OSP mit dem Aufladepuls und/oder einem ersten Auslesepuls;

a2) Beaufschlagen des OSP mit einem zweiten Auslesepuls;

b1) Erfassen eines ersten Messwertes, bei dem es sich um den oben beschriebenen Messwert handeln kann, durch Detektion einer optischen Emission des OSP in Reaktion auf den Aufladepuls und/oder den ersten Auslesepuls;

b2) Erfassen mindestens eines zweiten Messwertes durch Detektion einer optischen Emission des OSP in Reaktion auf den zweiten Auslesepuls.

Der zweite Messwert ist hierbei abhängig von dem Aufladepuls und/oder dem ersten Auslesepuls in Schritt a1). Bevorzugt werden die Schritte a1), a2), b1) und b2) in der angegebenen Reihenfolge durchgeführt. Die Verwendung zweier Auslesepulse ermöglicht insbesondere die Bestimmung der Vertauschbarkeit der Auslesepulse als Gedächtniseigenschaft des OSP. Falls der OSP nichtkommutativ ist, führt eine andere Reihenfolge des ersten und des zweiten Auslesepulses zu einem anderen Ergebnis für den ersten Messwert und für den zweiten Messwert.

Gemäß zumindest einer Ausführungsform des Verfahrens beinhaltet Schritt b) ferner zumindest einen der folgenden Schritte:

- Bestimmen und Auswerten von Parametern des Aufladepulses und/oder Auslesepulses;
- Bestimmen und Auswerten eines zur Erfassung des Messwertes genutzten Messparameters;
- Bestimmen und Auswerten einer Hintergrundstrahlung;
- Bestimmen und Auswerten einer zeitlichen Beziehung zwischen dem Aufladepuls und/oder dem Auslesepuls und der Erfassung des Messwerts.

Bei den Parametern des Aufladepulses bzw. des Auslesepulses handelt es sich insbesondere um die oben genannten Eigenschaften des Auflade- und/ oder Auslesepulses, wie Wellenlänge, Pulsdauer und/ oder Pulsenergie, bevorzugt um deren Peak-Wellenlänge. Ferner kann es sich bei den Parametern um die Anzahl der verwendeten Aufladepulse und/oder der verwendeten Auslesepulse handeln. Die Parameter können ferner die Leistung und/ oder den Strahldurchmesser des Aufladepulses bzw. des Auslesepulses an dem Ort des OSP umfassen.

Die Messparameter beinhalten beispielsweise die Art und Weise der Messung des Messwertes. Bevorzugt beinhalten die Messparameter Informationen über den verwendeten Detektor, wie beispielsweise dessen spektrale Auflösung (spektrale Bandbreite), dessen räumliche Auflösung und/oder dessen zeitliche Auflösung (Bandbreite). Die Information über den verwendeten Messparameter kann insbesondere dann vorteilhaft sein, wenn mehrere Signale von dem OSP als Reaktion auf den Auslesepuls und/oder den Aufladepuls emittiert werden.

Bei der Hintergrundstrahlung handelt es sich insbesondere um den Hintergrund der Messung. Durch die Bestimmung der Hintergrundstrahlung oder mit deren Kenntnis können störende Einflüsse der Umgebung aus dem Messwert entfernt werden.

Bei der zeitlichen Beziehung handelt es sich insbesondere um die zeitliche Abfolge zwischen dem Aufladepuls und dem Auslesepuls und/oder zwischen aufeinanderfolgenden Aufladepulsen und/oder zwischen aufeinanderfolgenden Auslesepulsen und/oder zwischen dem Aufladepuls oder dem Auslesepuls und der Detektion des Messwerts. Bevorzugt handelt es sich bei der zeitlichen Beziehung um die verwendete zeitliche Reihenfolge der in dem Verfahren verwendeten Verfahrensschritte. Die zeitliche Beziehung zwischen dem Aufladepuls und dem Auslesepuls und/oder zwischen aufeinanderfolgenden Aufladepulsen und/oder zwischen aufeinanderfolgenden Auslesepulsen und/oder zwischen einem Aufladepuls oder Auslesepuls und der Bestimmung des Messwerts kann eine genaue Bestimmung des OSP ermöglichen. Beispielsweise ist es durch Kenntnis der zeitlichen Beziehung möglich, Gedächtniseigenschaften des OSP zu bestimmen. Ferner ist es möglich, bei Kenntnis der entsprechenden Gedächtniseigenschaft, aufgrund der zeitlichen Beziehung ein Echtheitsbewertungsverfahren durchzuführen.

So können beispielsweise zwei unterschiedliche OSP gleiche oder ähnliche Emissionseigenschaften in Bezug auf deren Wellenlänge aufweisen. Sie können jedoch unterschiedliche Zeitkonstanten der Emission aufweisen. Die Zeitkonstanten sind beispielsweise durch eine unterschiedliche Gedächtnistiefe, eine unterschiedliche Aufladegeschwindigkeit und/oder eine unterschiedliche Auslesegeschwindigkeit bedingt. Durch Kenntnis der zeitlichen Beziehungen zwischen Lichtpulsen und Messprozessen können derartige unterschiedliche Zeitkonstanten ermittelt und bei der Auswertung berücksichtigt werden. Es ist ferner möglich, dass unterschiedliche Zeitabläufe in einer ansonsten gleichen Messsequenz bei unterschiedlichen OSP zu unterschiedlichen Messwerten führen können. Dies kann beispielsweise eine Folge von einer sich unterscheidenden Persistenz der beiden OSP sein. Durch eine Änderung der zeitlichen Abstände zwischen Aufladepulsen und/oder Auslesepulsen und/oder der Detektion kann somit die Andersartigkeit zweier sich ansonsten gleich verhaltender OSP ermittelt werden.

Gemäß zumindest einer Ausführungsform weist der optische Speicherleuchtstoff eine spezifische Defektstruktur auf, die beispielsweise durch die hier beschriebenen Modifikationen 1 bis 8 erzeugt wurde. Die Defektstruktur kann sich in der charakteristischen Art der Speichereigenschaften und/oder der optisch stimulierten Lumineszenz bemerkbar macht und durch die Gedächtniseigenschaften und weitere, OSL-beschreibende Messgrößen charakterisiert werden.

Gemäß zumindest einer Ausführungsform des Verfahrens weist der optische Speicherleuchtstoff Fallenzentren und Leuchtzentren auf, wobei sich in dem optischen Speicherleuchtstoff vorhandene Ladungsträger vor Schritt a) zumindest teilweise in den Fallenzentren befinden. Ferner gehen die Ladungsträger durch den Aufladepuls von den Leuchtzentren zumindest teilweise in die Fallenzentren über und/oder durch den Auslesepuls von den Fallenzentren zumindest teilweise in die Leuchtzentren über, wobei sie in den Leuchtzentren strahlend relaxieren.

In diesem Fall wird als Messwert bevorzugt die strahlende Relaxation des Leuchtzentrums gemessen. Ferner kann der zeitliche Abstand zwischen dem Aufladepuls und dem Auslesepuls und/oder dem Auslesepuls und der Detektion des Messwerts als zeitliche Beziehung bestimmt werden. Die zeitliche Beziehung gibt dann beispielsweise Aufschluss über die Diffusion der Ladungsträger zwischen den Leuchtzentren und den Fallenzentren.

Es ist möglich, dass die in dem OSP gespeicherten Ladungsträger von den Fallenzentren durch die thermische Energie bei Raumtemperatur nicht in signifikantem Maße freigesetzt werden. Insbesondere kann die mittlere Verweildauer (sogenannte Persistenz) der Ladungsträger in den Fallenzentren bei Raumtemperatur länger, bevorzugt wenigstens fünf Mal länger und besonders bevorzugt wenigstens 100 Mal länger, als die Dauer des verwendeten Echtheitsbewertungsverfahrens sein. Dies kann typischerweise in 0,1 bis 10 Sekunden erfolgen. Vorzugsweise ist die Persistenz länger als 5 ms, insbesondere länger als 50 ms. In einer Ausgestaltung ist die Persistenz länger als 750 ms und bevorzugt länger als 5 min.

Beispielsweise werden die in den Fallenzentren gespeicherten Ladungsträger erst durch die Zufuhr einer geeigneten Energiemenge, nämlich den Auslesepuls, freigesetzt. Die freigesetzten Ladungsträger können dann am Leuchtzentrum unter der Emission von Licht relaxieren (sogenanntes strahlendes Relaxieren), wodurch ein Auslesen des Speicherleuchtstoffs ermöglicht wird.

Gemäß zumindest einer Ausführungsform des Verfahrens ist eine elektrische Leitfähigkeit des optischen Speicherleuchtstoffs während des Beaufschlagens mit dem Aufladepuls und/oder dem Auslesepuls in Schritt a) höher als außerhalb des Beaufschlagens.

Während des Beaufschlagens mit dem Aufladepuls (gegebenenfalls mit der Aufladesequenz) und/oder mit dem Auslesepuls (gegebenenfalls mit der Auslesesequenz) kann der OSP aufgrund der Bewegung der Ladungsträger eine veränderte lichtinduzierte elektrische Leitfähigkeit aufweisen. Bevorzugt zeigt der Speicherleuchtstoff während der Aufladesequenz und/ oder während der Auslesesequenz eine maximale elektrische Leitfähigkeit, die höher, insbesondere um mindestens 50% höher, ist als außerhalb dieser Prozesse.

Gemäß zumindest einer Ausführungsform des Verfahrens wird vor Schritt a) ein weiterer Messwert durch Detektion einer optischen Intensität erfasst. Dieser Messung kann beispielsweise der Bestimmung einer Hintergrundstrahlung dienen, oder sie kann über die Messung einer eventuellen intrinsischen Lumineszenz anzeigen, dass der OSP bereits vor Beginn des hier beschriebenen Verfahrens aufgeladen vorliegt.

Es wird ferner eine Vorrichtung zum Durchführen eines Verfahrens zum Prüfen von Echtheitsmerkmalen mit einem optischen Speicherleuchtstoff angegeben. Die Vorrichtung ist bevorzugt zur Durchführung eines zuvor beschriebenen Verfahrens, besonders bevorzugt mit einem zuvor beschriebenen OSP, eingerichtet. Das heißt, sämtliche für das Verfahren und für den OSP offenbarten Merkmale sind auch für die Vorrichtung offenbart und umgekehrt.

Die Vorrichtung umfasst eine Lichtquelle, die dazu eingerichtet ist, den OSP mit dem mindestens einen Aufladepuls und/oder dem mindestens einen Auslesepuls zu beaufschlagen.

Ferner umfasst die Vorrichtung eine Detektionseinrichtung zur Detektion der optischen Emission und zum Erfassen des Messwertes, insbesondere in Schritt b). Die Vorrichtung umfasst eine Auswerteeinrichtung, die dazu eingerichtet ist, den erfassten Messwert auszuwerten und anhand der Auswertung die Echtheitsbewertung in Schritt c) durchzuführen. Die Vorrichtung ist insbesondere dazu eingerichtet, einen spezifischen positiven Nachweis des Speicherleuchtstoffs auszugeben und basierend auf dem Nachweis die Auswertung auf Echtheit des Sicherheitsmerkmals, beispielsweise eines Wertdokuments, durchzuführen.

Die Lichtquelle emittiert im Betrieb bevorzugt Licht, das eine Peak-Wellenlänge im Wellenlängenbereich des Auslesespektrums und/oder des Aufladespektrums aufweist. Insbesondere kann das Licht im Wellenlängenbereich des Auslesespektrums unabhängig, insbesondere zeitlich und/oder räumlich getrennt, von Licht im Wellenlängenbereich des Aufladespektrums emittiert werden. Beispielsweise beinhaltet die Lichtquelle eine oder mehrere Leuchtdioden und/oder Laserdioden, gegebenenfalls mit Konversionselementen zur Bereitstellung von grünen, gelben und/oder roten Licht.

Die Vorrichtung kann beispielsweise für den Einsatz in Geldautomaten (auch oftmals als ATM bezeichnet), einer Geldscheinzählvorrichtung, einer Geldscheinprüfvorrichtung und/oder eine Verifizierungseinheit für Ausweisdokumente eingerichtet sein. Die Vorrichtung umfasst bevorzugt eine Steuereinheit, wie beispielsweise einen Computer, insbesondere einen PC oder einen Microcontroller. Die Steuereinheit kann dazu eingerichtet sein, die Lichtquelle derart anzusteuern, dass die gewünschte Messsequenz mit dem Aufladepuls und/oder dem Auslesepuls bereitgestellt wird. Die Vorrichtung weist insbesondere eine Aufnahmeeinheit zur Aufnahme von Wertdokumenten, wie beispielsweise Geldscheinen oder Pässen, auf. Die Vorrichtung kann unabhängig von einem Server als autarkes System arbeiten oder mit einem Server verbunden sein. Der Server kann lokal bereitgestellt sein. Alternativ oder zusätzlich kann die Vorrichtung zu einem Server, der extern zu einem lokalen Netzwerk, in dem sich die Vorrichtung befindet, angeordnet ist, in Kommunikation stehen bzw. mit diesem verbunden sein. Der Server kann Aufgaben zur Auswertung von Messergebnissen und zur Echtheitsbewertung übernehmen und/ oder Daten zur Echtheitsbewertung und/ oder Bewertung von Messergebnissen bereitstellen. Insbesondere kann es sich um einen Server in einer Cloud-Umgebung handeln. Der Server kann Anweisungen bereitstellen, die die Abfolge und Parameter der Auflade- und Auslesepulse sowie der Messprozesse betreffen. Diese Anweisungen können sich je nach Typ des zu prüfenden Wertdokuments unterscheiden.

Es werden ferner ein Echtheitsmerkmal sowie ein Wertdokument angegeben. Das Echtheitsmerkmal und das Wertdokument beinhalten jeweils bevorzugt einen hier beschriebenen optischen Speicherleuchtstoff. Ferner wird die Echtheit des Echtheitsmerkmals bzw. des Wertdokuments bevorzugt mit einem hier beschriebenen Verfahren, insbesondere unter Verwendung einer hier beschriebenen Vorrichtung, geprüft. Das heißt, sämtliche für den OSP, für das Verfahren und für die Vorrichtung offenbarten Merkmale sind auch für das Echtheitsmerkmal und das Wertdokument offenbart und umgekehrt.

Gemäß zumindest einer Ausführungsform umfasst das Echtheitsmerkmal einen hier beschriebenen OSP. Bei dem Echtheitsmerkmal handelt es sich bevorzugt um einen Zuschlagstoff für ein Wertdokument, insbesondere für ein Trägermaterial des Wertdokuments, und/oder um ein Folienelement. Insbesondere kann das Echtheitsmerkmal in Form einer Druckfarbe, als Pigment und/oder als Beschichtungszusammensetzung auf das Wertdokument aufgebracht werden, beispielsweise als lumineszenter Stoff in einer Druckfarbe. Weiterhin kann der OSP während der Herstellung eines Trägermaterials des Wertdokuments in das Trägermaterial eingebracht werden, beispielsweise als Pigment während der Blattbildung eines Sicherheitspapiers.

Gemäß zumindest einer Ausführungsform des Echtheitsmerkmals weist der in dem Echtheitsmerkmal vorhandene OSP eine ausgeprägte spektrale Struktur auf, insbesondere mit wenigstens zwei lokalen Maxima. Bei den zwei lokalen Maxima handelt es sich bevorzugt um die zuvor beschriebenen zwei Maxima des Auslesespektrums. Die spektrale Struktur entspricht dann insbesondere dem Auslesespektrum.

Gemäß zumindest einer Ausführungsform des Echtheitsmerkmals weist der in dem Echtheitsmerkmal vorhandene OSP eine schnelle Auslesbarkeit auf, beispielsweise kann unter fokussierter Bestrahlung mit Ausleselicht geeigneter Wellenlänge (d.h. die Peak-Wellenlängen liegt im Bereich des Auslesespektrums) bei einer Leistung von wenigstens 350 mW die OSL-Intensität nach weniger als 5 ms unter 20% des initialen Signals gebracht werden.

Gemäß zumindest einer Ausführungsform beinhaltet das Wertdokument mindestens ein hier beschriebenes Echtheitsmerkmal, insbesondere mit einem hier beschriebenen optischen Speicherleuchtstoff. Bei dem Wertdokument handelt es sich bevorzugt um eine Banknote. Das Wertdokument kann ferner ein Ausweisdokument, wie beispielsweise ein Pass, eine Fahrkarte, eine Wertmarke und/ oder ein sonstiges Objekt sein, wie z.B. Zertifikat, dessen Echtheit durch das Echtheitsmerkmal bekräftigt bzw. bezeugt werden soll. Insbesondere bevorzugt weist das Wertdokument ein Substrat aus Papier und/oder Kunststoff auf. Besonders bevorzugt ist das Echtheitsmerkmal in das Volumen des Wertdokuments eingebracht und/oder auf das Wertdokument aufgebracht.

Kurze Beschreibung der Figuren

Bevorzugte weitere Ausführungsformen der Erfindung werden durch die nachfolgende Beschreibung der Figuren sowie von Ausführungsbeispielen näher erläutert. Hierbei zeigen:

Figur 1: ein Ausführungsbeispiel eines hier beschriebenen optischen Speicherleuchtstoffs sowie eines Verfahrens zum Prüfen eines Echtheitsmerkmals mit einem OSP gemäß der Erfindung;

Figuren 2, 3, 4, 5, 6, 7 und 8: Ausführungsbeispiele von Verfahren gemäß der Erfindung.

Detaillierte Beschreibung bevorzugter Ausführungsbeispiele

Im Folgenden werden ein optischer Speicherleuchtstoff gemäß der Erfindung, ein Verfahren gemäß der Erfindung, die hier beschriebene Vorrichtung gemäß der Erfindung, das hier beschriebene Echtheitsmerkmal gemäß der Erfindung sowie das hier beschriebene Wertdokument gemäß der Erfindung anhand von bevorzugten Ausführungsbeispielen näher erläutert.

Hierzu wird insbesondere auf zugehörige Figuren verwiesen, die dem besseren Verständnis dienen.

In den Figuren werden gleiche, gleichartige, ähnliche oder gleichwirkende Elemente mit denselben Bezugszeichen versehen. Auf eine wiederholte Beschreibung dieser Elemente wird teilweise verzichtet, um Redundanzen zu vermeiden. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

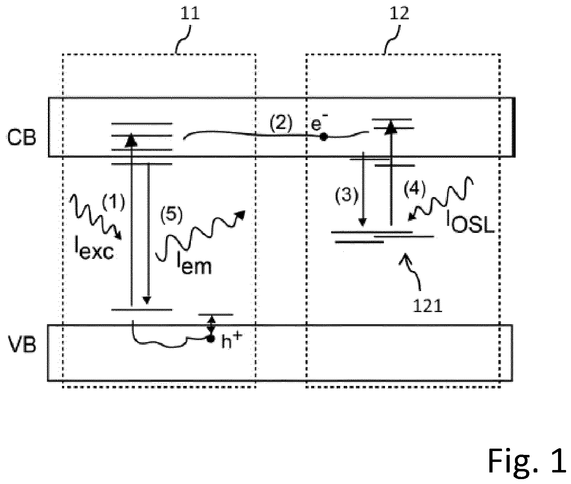

Anhand der schematischen Darstellung der Figur 1 ist eine allgemeine Funktionsweise, insbesondere ein allgemeines Ausführungsbeispiel, eines hier im Rahmen der Erfindung beschriebenen optischen Speicherleuchtstoffs (OSP) näher erläutert. Die Figur 1 gibt vereinfacht die mit optisch stimulierter Lumineszenz (OSL) verknüpften Prozesse und das Energieschema eines, insbesondere anorganischen, optischen Speicherleuchtstoffs wieder. Der optische Speicherleuchtstoff enthält ein Leuchtzentrum 11 und ein Fallenzentrum 12 mit Fallenzuständen 121. $I_{exc}$ bezeichnet Licht zur Anregung des Leuchtzentrums 11, das auch zum Aufladen des OSP geeignet sein kann. $I_{em}$ bezeichnet vom Leuchtzentrum 11 emittiertes Licht, insbesondere sowohl intrinsische Lumineszenz als auch optisch stimulierte Lumineszenz. $I_{OSL}$ bezeichnet das stimulierende (auslesende) Licht, das einen gespeicherten Ladungsträger (in der Figur 1 beispielhaft als Elektronen e- angedeutet) am Fallenzentrum in das Leitungsband CB anregen kann. Angedeutet ist eine mögliche Beteiligung von Löchern h+ aus dem Valenzband VB.

Charakteristisch für den hier beschriebenen OSP kann sein, dass zwei eigenständige optische Systeme, im vorliegenden Ausführungsbeispiel ein Leuchtzentrum 11 und ein Fallenzentrum 12, lichtgetrieben miteinander koppeln. Bestrahlt man den OSP mit Strahlung geeigneter Energie (z. B. Wellenlänge, Intensität, Dauer), werden am Leuchtzentrum 11 (in der Regel ein Metall-Ion) Elektronen e- ins Leitungsband CB - beziehungsweise in Zustände am Leitungsband CB - gehoben. Dies ist in Figur 1 als Prozess (1) bezeichnet. Im Leitungsband diffundieren die Ladungsträger e- (Prozess (2)) und können von dort zu energetisch tiefer liegenden Fallenzuständen 121 (engl. Traps, assoziiert mit den Fallenzentren 12) gelangen und in diesen Fallenzuständen 121 gespeichert werden (Prozess (3)). Diese Fallenzustände 121 liegen in unterschiedlichem energetischen Abstand zum Leitungsband CB. Liegen die Fallenzustände 121 so nahe am Leitungsband CB, dass bereits die thermische Energie bei Raumtemperatur ausreicht, um diese zu leeren, führt dies zu Thermolumineszenz bei Raumtemperatur, was als Nachleuchten oder persistente Lumineszenz beschrieben wird. Bei tieferliegenden Fallenzuständen 121 reicht die thermische Energie bei Raumtemperatur nicht aus, um die Ladungsträger e- wieder ins Leitungsband CB zu heben. In diesen tiefen Fallenzuständen 121 sind die Ladungsträger e- stabil gespeichert. Erst durch die Zufuhr einer geeigneten Energiemenge, beispielsweise durch die Bestrahlung mit Licht, werden die Ladungsträger e- in einen angeregten Fallenzustand gebracht und können in das Leitungsband CB freigesetzt werden (Prozess (4)). Die Ladungsträger e- diffundieren erneut im Leitungsband CB (Prozess (2)) und rekombinieren zumindest teilweise am Leuchtzentrum 11 unter der Emission von Licht (Prozess (5)).

In Abgrenzung zur Phosphoreszenz, bei der im Leuchtzentrum 11 selbst der angeregte Ladungsträger e- in einen Triplettzustand gebracht wird und aus diesem mit einer charakteristischen Zeitkonstante in einen anderen Zustand des Leuchtzentrums 11 relaxiert, findet in dem OSP eine umkehrbare, lichtgetriebene Donor-Akzeptor-Reaktion statt. In einer vereinfachten Darstellung dieser umkehrbaren, lichtgetriebenen Donor-Akzeptor-Reaktion gibt beim Speichervorgang das Leuchtzentrum als Donor einen Ladungsträger ab (in der Regel wird das Leuchtzentrum 11 oxidiert) und ein davon unterschiedliches Fallenzentrum 12 nimmt als Akzeptor den Ladungsträger e- auf (das Fallenzentrum 12 wird in der Regel also reduziert). Am Fallenzentrum 12 ist der Ladungsträger e- in einem Fallenzustand 121 gebunden. Um den Fallenzustand 121 zu leeren, ist es erforderlich, den vorherigen Prozess umzukehren, sodass dann das Fallenzentrum 12 als Donor einen Ladungsträger e- abgibt (also oxidiert wird) und das Leuchtzentrum 11 als Akzeptor den Ladungsträger e- aufnimmt (also reduziert wird). Zwischen der Abgabe und der Aufnahme der Ladungsträger e- können diese durch das Leitungsband CB diffundieren, sodass sich in diesen Systemen auch eine lichtinduzierte, persistente Leitfähigkeit feststellen lässt.

In dem beschriebenen Mechanismus ist der Fallenzustand 121 an ein Fallenzentrum 12 (wie zum Beispiel eine Vakanz, ein zu dotiertes Fremdion als Substitutionsatom, Zwischengitteratome oder auch komplexere aggregierte Defekte) gebunden. Es ist vorteilhaft, wenn die Ladungsträger e- in den energetischen Grundzustand des Fallenzentrums 121 (Fallengrundzustand) relaxieren und somit nicht in einem Triplettzustand mit einer begrenzten Lebensdauer vorliegen. Die Fallenzentren 12 stellen zusammen ein gegenüber den Leuchtzentren 11 eigenständiges optisches System dar. Somit sind die zugehörigen elektronischen Zustände unabhängig von denen der Leuchtzentren 11.

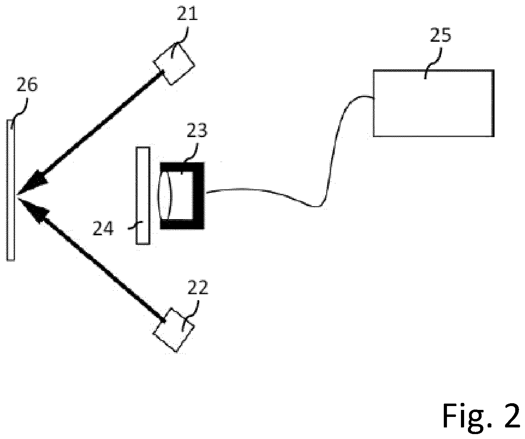

Anhand der schematischen Darstellung der Figur 2 ist beispielhaft ein erfindungsgemäßes Verfahren sowie eine hier beschriebene Vorrichtung zur Durchführung des Verfahrens zur Bestimmung und/ oder Echtheitsbewertung eines OSP näher erläutert.

Der optische Speicherleuchtstoff (OSP) 26 wird mit der Messvorrichtung hinsichtlich seiner optischen Eigenschaften vermessen. Die Vorrichtung enthält eine Lichtquelle 21 zum Aufladen des OSP, eine weitere Lichtquelle 22 zum Auslesen, einen Detektor 23 mit einem Filter 24 sowie eine Vorrichtung zur Datenaufzeichnung und -auswertung 25.

Bei der Lichtquelle 21 und/oder der Lichtquelle 22 kann es sich beispielsweise jeweils um eine Leuchtdiode oder eine Laserdiode oder eine spektral durchstimmbare Vorrichtung wie eine Halogen-Metalldampflampe mit einstellbarem Monochromator handeln. Der Detektor 23 ist eine Photodiode, bevorzugt ein Si-Avalanche-Photodiodenmodul, mit angepasster Sammel-Optik. Bei dem Filter 24 kann es sich um einen Bandpassfilter mit Durchlassbereich von 500 nm bis 600 nm, bevorzugt mit einer Zentralwellenlänge von 550 nm und einer Halbwertsbreite von 40 nm oder Zentralwellenlänge von 570 und einer Halbwertsbreite von 30 nm, handeln. Dadurch wird die Intensität des Auslese- und Aufladelichts auf dem Detektor 23 reduziert, so dass sich die OSL mit höherer Genauigkeit messen lässt. Der OSP 26 ist beispielsweise auf einen Messträger aufgebracht, in ein Papier eingebracht oder liegt pulverförmig in einer Messküvette vor.

Für die Bestimmung des Auslesespektrums des OSP 26 wird dieser von den beiden Lichtquellen 21, 22 abwechselnd gepulst an derselben Stelle beleuchtet und das emittierte Licht wird detektiert. Dabei wird die Wellenlänge des auslesenden Lichts durchgestimmt, beispielsweise um 5 nm von Puls zu Puls. Vergleichbarkeit wird durch geeignete Einstellung der Belichtungsdauer und Intensität des aufladenden Pulses sowie des auslesenden Pulses erzielt. Beispielsweise kann die Intensität des Aufladepulses so groß sein, dass nach dem Aufladen im Wesentlichen alle Fallenzustände besetzt sind. Die Zuordnung des Detektor-Signals zur Wellenlänge des auslesenden Lichts ergibt das Auslesespektrum.

Um das dynamische Verhalten des OSP 26 zu bewerten, wird der OSP 26 mit einem Aufladepuls und anschließend mit mehreren gleichen Auslesepulsen bestrahlt (vgl. auch das Schema der Energieniveaus der Figur 1). Hierbei ist die Wellenlänge des Lichts des Auslesepulses fest. Zu jedem Auslesepuls wird die Intensität der OSL gemessen. Aus der Zuordnung des Detektor-Signals zur verstrichenen Zeit seit Beginn des Auslesens, nämlich seit dem ersten Auslesepuls, lässt sich die Auslesekurve bestimmen. Die Auslesekurve beschreibt das dynamische Verhalten des Speicherleuchtstoffes unter den gewählten Bedingungen (Dauer, Intensität und Wellenlänge der Auflade- und Auslesepulse).

Aus der Auslesekurve lassen sich für das Verhalten des Speicherleuchtstoffes charakteristische Maße bestimmen, z. B. Maße für die Auslesegeschwindigkeit unter den gewählten Bedingungen, beispielsweise über das Intensitätsverhältnis zu bestimmten Zeiten während der Auslesesequenz oder über geeignete, auch logarithmische, Ableitungen. Diese charakteristischen Maße sind insbesondere der oben beschriebene Messwert.

Im Folgenden werden weitere Ausführungsbeispiele, insbesondere bevorzugte Stoffzusammensetzungen, eines hier beschriebenen OSP sowie deren Anwendung in einem hier beschriebenen Verfahren erläutert. Die angegebenen Stoffmengen und -gewichte sind jeweils innerhalb der üblichen Herstellungstoleranzen zu verstehen.

Die Auswahl bevorzugter Stoffe erfolgt vorzugsweise, indem man mit unterschiedlichen relevanten, aber jeweils festgehaltenen Messsequenzen mehrere Stoffe, welche die hier beschriebenen Zusammensetzungen und eine speziell abgestimmte Defektstruktur aufweisen, misst, und solche mit geeigneten Eigenschaften aussucht. Insbesondere weicht für die Gruppe ausgewählter Stoffe das Messergebnis für eine Messsequenz von dem Messergebnis für eine andere (gegebenenfalls auch ähnliche) Messsequenz ab. Dies entspricht dem genannten Vorteil der engen Kopplung von Nachweisverfahren und Merkmalsstoff - entsprechend der Gedächtniseigenschaft des OSP.

Wegen der engen Verknüpfung eines optimal geeigneten OSP an das Nachweisverfahren kann eine Reihenuntersuchung hilfreich sein, geeignete Formulierungen von Stoffen zu finden. Für eine Ausprägung des Echtheitsnachweises über optisch stimulierte Lumineszenz wird ein geeigneter Stoff ausgewählt, indem eine Reihe von Stoffkandidaten gemäß der hier beschriebenen stöchiometrischen Zusammensetzungen hergestellt und daraufhin untersucht werden, wie gut sich die Stoffkandidaten aufladen und auslesen lassen, wobei sowohl zeitliches als auch spektrales Verhalten und die erzielten Intensitäten der Photolumineszenz und der OSL bewertet werden können. Zusätzlich können auch Eigenschaften wie Fading und/oder relative Intensitäten z. B. während des ersten Auslesens relativ zum Aufladen oder das Verhältnis der Intensitäten der OSL für zwei oder mehrere unterschiedliche Wellenlängen des Ausleselichts herangezogen werden.

Die jeweiligen bevorzugten Stoffzusammensetzungen wurden unterschiedlichen Messsequenzen im Einklang mit einem Ausführungsbeispiel eines hier beschriebenen Prüfverfahrens unterworfen. Insbesondere werden die Sequenzen der Ausführungsbeispiele 1 bis 18 als Ausführungsbeispiele eines hier beschriebenen Prüfverfahrens verwendet.

Bei sämtlichen Messungen überlappen die Beleuchtungsflecken der verschiedenen Laserbeleuchtungen signifikant auf der Probe (OSP). Das emittierte Licht wird mit einem Avalanche-Photodiodenmodul mit geeigneter Detektionsoptik zur Abbildung des Messflecks auf den Detektor und Filterung (Bandpassfilterung mit 550 nm Zentralwellenlänge und 44 nm Halbwertsbreite) gemessen. Das Ausgangssignal wird über einen schnellen A/D Wandler bei 2 Msample/s ausgelesen und am PC verarbeitet. Wenn nicht anderweitig explizit beschrieben, wird die maximale Intensität des N-ten Pulses einer Auslesesequenz gemessen am Stoff s als $I_N(s)$ bezeichnet. Ist diese Größe auf den ersten Puls der zugehörigen Auslesesequenz normiert, wird sie als $I_{N,norm}(s)$ bezeichnet.

Soweit nicht anders angegeben, handelt es sich bei den Auflade- und Auslesepulsen im ms-Bereich in guter Näherung um Rechteckpulse, die angegebene Leistung ist die mittlere Leistung über die Pulsdauer.

In der Beschreibung der Beispielstoffe wird die jeweils nominell angesetzte Stöchiometrie benannt, ohne den Ladungsausgleich durch die Anpassung des Sauerstoffanteils (d.h. die Größe d) oder eventuellen Einbau aus zugesetztem Flux (d.h. die Größe t) explizit zu erwähnen. Das heißt, für die Herstellung kann aus dem angegebenen molaren Anteil der konstituierenden Elemente (ohne exakte Berücksichtigung des Sauerstoffanteils) die einzusetzende Rohstoffmenge jeweils erschlossen werden.

1. Ausführungsbeispiel: nominell $Gd_{3.04}Al_2Ga_3O_{12}$: $Ce_{0.005}$, $Yb_{0.005}$

Das erste Ausführungsbeispiel des OSP (Stoff 1) wird mittels "Combustion Synthesis" hergestellt. Als Ausgangsstoffe dienen die entsprechenden Nitrate. Zunächst werden 6.1386g $Gd(NO_3)_3 \cdot 6(H_2O)$, und 4.6413g

$Ga(NO_3)_3 \cdot 5(H_2O)$, in einen Erlenmeyerkolben eingewogen und in ca. 150 ml Wasser gelöst. Die anderen Stoffe werden aus wässrigen Stammlösungen hinzu pipettiert, sodass entsprechend 3.3565g $Al(NO_3)_3 \cdot 9(H_2O)$, 0.0097g $Ce(NO_3)_3 \cdot 6(H_2O)$, und 0.01g $Yb(NO_3)_3 \cdot 5(H_2O)$ in Lösung vorliegen. Als Treibstoff wird eine Mischung aus 1.6121g Carbohydrazid $CH_6N_4O$ und 4.2317g Harnstoff $CH_4N_2O$ zugegeben. Die Stoffe werden vollständig gelöst und die Lösung auf einer Heizplatte in einem explosionsgesicherten Abzug weiter erhitzt. Unter Einhaltung der vorschriftsmäßigen Sicherheitsmaßnahmen wird der Stoffansatz schließlich bis zur Zündung gebracht. Nach vollständiger Reaktion liegt ein gelbes Pulver vor. Abschließend wird der OSP nochmals bei 1250°C für 10 Stunden nachgetempert. Daten der Röntgenstrukturanalyse bestätigten das Vorliegen einer Granatstruktur mit lediglich geringen Beimengungen anderer Phasen.

2. Ausführungsbeispiel: nominell $Gd_{2.54}La_{0.5}Al_2Ga_3O_{12}$: $Ce_{0.005}$, $Tm_{0.005}$

Der OSP gemäß dem zweiten Ausführungsbeispiel (Stoff 2) wird mittels "Combustion Synthesis" hergestellt. Die Herstellung folgt im Ablauf derjenigen von Stoff 1. Eingesetzte Rohstoffe und Stoffmengen sind: 5.1395g $Gd(NO_3)_3 \cdot 6(H_2O)$, 0.9706g $La(NO_3)_3 \cdot 6(H_2O)$, 4.6509g $Ga(NO_3)_3 \cdot 5(H_2O)$, 3.3635g $Al(NO_3)_3 \cdot 9(H_2O)$, 0.01g $Tm(NO_3)_3 \cdot 5(H_2O)$, 0.0097g $Ce(NO_3)_3 \cdot 6(H_2O)$.

3. Ausführungsbeispiel: nominell $Gd_{2.52}La_{0.5}Al_2Ga_3O_{12}$: $Ce_{0.04}$, $Zr_{0.005}$

Der OSP gemäß dem dritten Ausführungsbeispiel (Stoff 3) wird mit Flussmittel (Flux) gestützter Feststoffsynthese hergestellt. Dazu werden die Ausgangsstoffe unter Zugabe von 10g $K_2SO_4$ als Flux sorgfältig vermischt und in einem Korundtiegel 10h bei 1200°C an Luft geglüht. Anschließend wird das Flussmittel ausgewaschen. Eingesetzte Rohstoffe und Stoffmengen sind: 0.8704g $La_2O_3$, 4.8809g $Gd_2O_3$, 1.0896g $Al_2O_3$, 3.0046g $Ga_2O_3$, 0.142g $Ce(SO_4)_2$, 0.0125g $ZrCl_4$.

Die Stoffe 1 bis 3 wurden experimentell hinsichtlich ihrer Auslesegeschwindigkeit verglichen. Hierfür wurden die Pulver der Stoffe 1 bis 3 vermahlen auf eine Korngröße von rund 15 $\mu$m gemäß D99, d.h., 99% der Partikel sind kleiner als 15$\mu$m, und in einem Anteil von 0.8 Gewichtsprozent in ein Testpapier (Labor-Standardverfahren zur Blattherstellung) eingebracht und gemessen.

Mit einem Aufladepuls wurden zunächst Fallenzustände in den Stoffen besetzt (Pulsdauer 20 ms). Nach weiteren 20 ms Wartezeit beginnt der Auslesepuls (Pulsdauer 20ms). Der Aufladepuls wird mit einer Laserdiode mit einer Peak-Wellenlänge von 450 nm, einer Leistung von 350 mW sowie einem Spotdurchmesser von 6 mm erzeugt. Der Auslesepuls wird mit einer fokussierten Laserdiode mit einer Peak-Wellenlänge von 638 nm und einer Leistung von 450 mW erzeugt.

Das emittierte Licht wird mit einem Avalanche-Photodiodenmodul mit vorgeschalteter Fokussieroptik und optischer Filterung gemessen. Das Ausgangssignal wird über einen schnellen A/D Wandler bei 2 Msample/s ausgelesen und am PC verarbeitet.

Nach Korrektur des Signals um den durchschlagenden Anteil des roten Ausleselasers und Normierung ergeben sich die charakteristischen Zeiten, die in der nachfolgenden Tabelle 1 dargestellt sind. Gezeigt ist ein Vergleich der Zeitdauern bis zu einem bestimmten Signalwert (90%, 50% und 20%) beim Auslesen der Stoffe 1 bis 3 unter gleichen Bedingungen. Diese charakteristischen Zeiten beschreiben, wie lange es ab dem Startzeitpunkt des Auslesens dauert, bis das OSL-Signal auf einen bestimmten relativen Wert abgeklungen ist. Der Begriff OSL-Signal bezeichnet das um einen Offset-Wert korrigierte Signal, das beim Auslesen des Stoffes erhalten wird. Bei einer Vergleichsmessung an kommerziellem Strontiumaluminat-Leuchtstoff (Nachleucht-Pigment Blau) wurde der 50% Wert unter diesen Bedingungen erst nach 7.88 ms erreicht.

**Tabelle 1**

| Stoff | OSL-Signal, 100% Wert | OSL-Signal 90%-Wert | OSL-Signal 50%-Wert | OSL-Signal 20%-Wert |
|---|---|---|---|---|
| Stoff 1 | 0.0ms | 0.16ms | 1.6ms | 7.8ms |
| Stoff 2 | 0.0ms | 0.11ms | 1.6ms | 11.0ms |
| Stoff 3 | 0.0ms | 0.02ms | 0.3ms | 2.9ms |

4. Ausführungsbeispiel: nominell $Gd_{2.54}Y_{0.5}Al_2Ga_3O_{12}$:$Ce_{0.005}$, $Bi_{0.01}$, $Mo_{0.005}$

Der OSP gemäß dem vierten Ausführungsbeispiel (Stoff 4) wird mit Flussmittel (Flux) gestützter Feststoffsynthese hergestellt. Die Herstellung folgt im Ablauf derjenigen von Stoff 3. Eingesetzte Rohstoffe und Stoffmengen sind: 0.6236g $Y_2O_3$, 5.0855g $Gd_2O_3$, 1.1263g $Al_2O_3$, 3.1054g $Ga_2O_3$, 0.0184g $Ce(SO_4)_2$, 0.0066g $MoO_3$, 0.0322g

$Bi_5O(OH)_9(NO_3)_4$ und 10g $K_2SO_4$ als Flux.

Messungen für die Stoffe 1 bis 4

Die Auslesespektren der Stoffe 1 und 4 wurden experimentell verglichen. Hierfür wurden die Pulver der Stoffe 1 und 4 jeweils in PMMA-Küvetten gegeben und in einem Laboraufbau vermessen. Die Stoffe 1 bzw. 4 wurden im Wechsel mit einem Puls einer blau emittierenden Laserdiode aufgeladen (Peak-Wellenlänge 450 nm, Leistung 300 mW, leicht aufgeweiteter Strahl mit ca. 3 mm Durchmesser, Pulsdauer 6 ms) und mit einer durchstimmbaren Laserlichtquelle (Pulsdauer im Bereich von 15 ns, maximale Pulsenergie 15 $\mu$J, Strahldurchmesser ca. 1 mm) ausgelesen. Die emittierte Strahlung wurde mit einem verstärkten Si-Detektor gemessen, das Signal digitalisiert und am PC ausgewertet.

Für einige der Laserwellenlängen ist das Verhältnis der jeweils auf das Maximum normierten OSL-Signale I von Stoff 4 relativ zu Stoff 1 d. h. $I_{norm}(4)/I_{norm}(1)$ in Tabelle 2 angegeben.

Für dieselben Wellenlängen ist in der Tabelle 2 auch das auf das Maximum normierte OSL-Signal für die Messung an Stoff 1 gegeben.

**Tabelle 1**

| Wellenlänge | $I_{norm}(4) / I_{norm}(1)$ | $I_{norm}(1)$ |
|---|---|---|
| 570 nm | 1.4 | 0.72 |
| 635 nm | 0.9 | 1.00 |
| 685nm | 0.8 | 0.85 |
| 730nm | 1.1 | 0.53 |
| 785nm | 1.5 | 0.29 |
| 808nm | 2.0 | 0.21 |
| 852nm | 4.1 | 0.12 |
| 940nm | 8.0 | 0.04 |
| 1064nm | 5.8 | 0.01 |

5. Ausführungsbeispiel: nominell $Gd_{2.52}La_{0.5}Al_{2.36}Ga_{2.5}O_{12}$: $Ce_{0.005}$, $Bi_{0.01}$, $Mo_{0.02}$

Der OSP gemäß dem fünften Ausführungsbeispiel (Stoff 5) wird analog zum Stoff 1 per Combustion Synthesis hergestellt. Als Ausgangsstoffe wurden $Gd(NO_3)_3 \cdot 6(H_2O)$, $La(NO_3)_3 \cdot 6(H_2O)$, $Ga(NO_3)_3 \cdot 5(H_2O)$, $Al(NO_3)_3 \cdot 9(H_2O)$, $Ce(NO_3)_3 \cdot 6(H_2O)$ Bi(NO3)3 * 5H2O sowie eine Molybdän-Analyse-Standardlösung für die Spektroskopie mit 1g/1 Mo jeweils entsprechend der angegebenen molaren Mengen eingesetzt.

Messungen für den Stoff 5

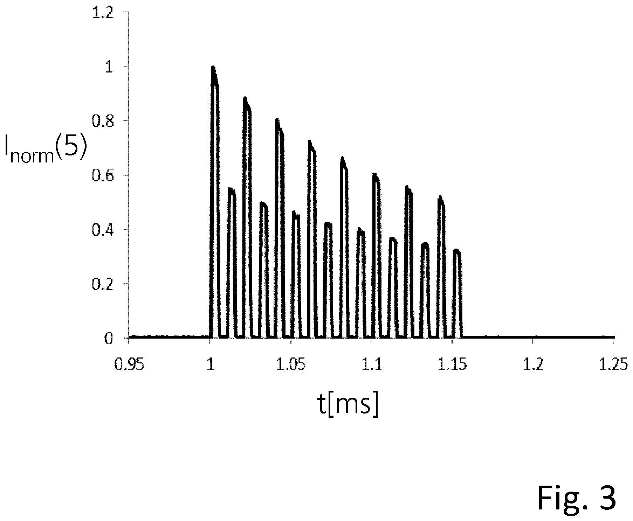

In Verbindung mit der Figur 3 ist ein Ausführungsbeispiel eines hier beschriebenen Verfahrens näher erläutert. Für die gezeigten Messungen wurde der Stoff 5 verwendet, wobei auch andere Stoffzusammensetzungen mit entsprechender Anpassung der Parameter verwendet werden können. Der OSP wurde einem Echtheitsnachweis gemäß dem hier beschriebenen Verfahren unterworfen.

Die gesamte verwendete Messsequenz (Sequenz 1) ist wie folgt aufgebaut:

1) Aufladepuls (Laserdiode, Peak-Wellenlänge 450 nm, rund 450 mW Leistung, defokussiert auf ca. 4 mm Beleuchtungsdurchmesser, Dauer 100 $\mu$s). Das Pulsende definiert den Zeitnullpunkt für die Messsequenz.

2) 1 ms Wartezeit.

3) Auslesepuls bzw. Auslesesequenz: Jeweils abwechselnde 8 Pulse R und R*.

Puls R: Laserdiode mit einer Peak-Wellenlänge von 638nm, rund 600 mW Leistung, fokussiert, Pulsdauer 4$\mu$s mit anschließend 6$\mu$s Wartezeit vor dem nachfolgenden Puls R*,

Puls R*: Laserdiode mit einer Peak-Wellenlänge von 852 nm und mit rund 720 mW Leistung, fokussiert, Pulsdauer 4$\mu$s mit anschließend 6$\mu$s Wartezeit vor dem nachfolgenden Puls R).

4) Wiederholen der Messsequenz mit einer Zyklusdauer von 2ms.

Für die Versuche wurde der Stoff 5 auf eine Korngröße von rund $5\mu m$ nach D99 vermahlen und in einem Anteil von 1 Gewichtsprozent in ein Testpapier (Labor-Standardverfahren zur Blattherstellung) eingebracht und gemessen.

Figur 3 zeigt die normierte Auslesekurve ($I_{norm}$) als Funktion der Zeit aus der Messung mit der obigen Sequenz 1. Gezeigt sind die jeweiligen Signale während der Auslesepulse. Aus dem Verlauf der Auslesekurve lässt sich auf den verwendeten OSP zurückschließen. Insbesondere zeigt sich hier die gute Auslesbarkeit von Stoff 5 bei roten und nah-infraroten (NIR) Wellenlängen. Die Daten werden bevorzugt weiterverarbeitet, beispielsweise indem für jeden Puls das Signal gemittelt wird und das Verhältnis aus der Signalintensität des n-ten Pulses zur der Signalintensität des ersten Pulses $S_n/S_1$ herangezogen wird. Außerdem kann beispielsweise die Auslesegeschwindigkeit auch als prozentuale Puls-zu-Puls Abnahme der Signalintensität unter definierten Pulsparametern der Auslesepulse beschrieben werden. Dieses Beispiel zeigt zudem die unterschiedliche Wirkung der Auslesepulse R und R*.

6. Ausführungsbeispiel: nominell $La_{0.5}Gd_{2.54}Al_2Ga_3O_{12}:Zr_{0.005}$

Der OSP gemäß dem sechsten Ausführungsbeispiel (Stoff 6) wird mit Flussmittel (Flux) gestützter Feststoffsynthese hergestellt. Dazu werden die Ausgangsstoffe unter Zugabe von 10g $Na_2SO_4$ als Flux sorgfältig vermischt und in einem Korundtiegel 10 h bei 1200°C geglüht. Eingesetzte Stoffe sind: 0.8795g $La_2O_3$, 4.9701 g $Gd_2O_3$, 1.1010g $Al_2O_3$, 3.0360g $Ga_2O_3$, 0.01256g $ZrCl_4$. Bei dem Stoff 6 wurde kein Cer zudotiert.

Messungen für den Stoff 6

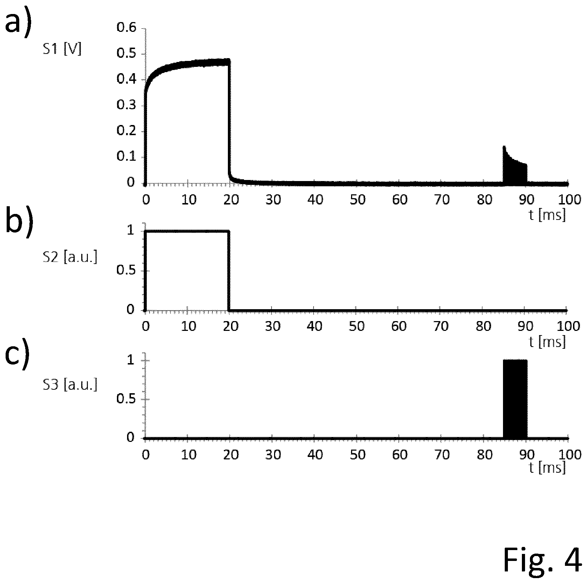

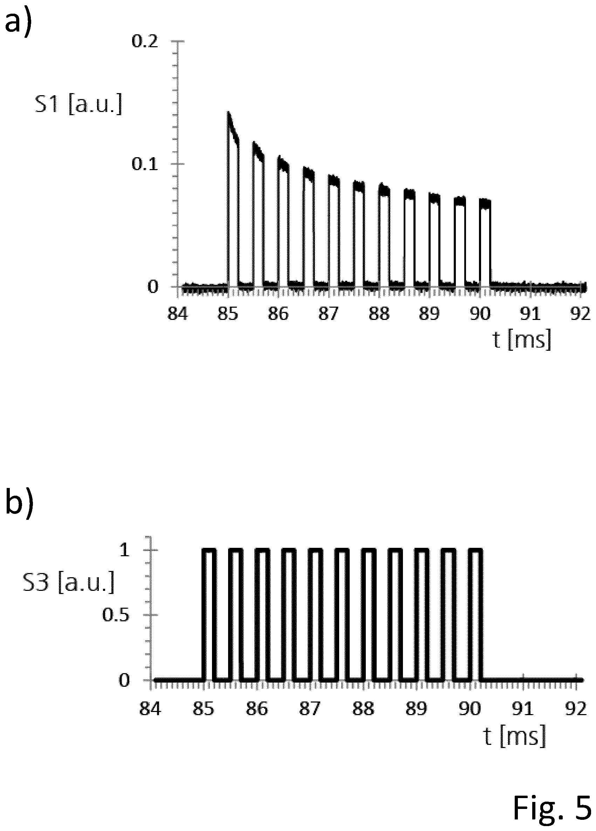

In Verbindung mit den Figuren 4a, 4b und 4c sowie mit der Figur 5 ist ein Ausführungsbeispiel eines hier beschriebenen Verfahrens näher erläutert. In dem Verfahren wurde der Stoff 6 einem Echtheitsnachweis unterworfen.

Die hierbei verwendete Messsequenz (Sequenz 2) ist wie folgt aufgebaut:

1) Aufladepuls (Laserdiode mit einer Peak-Wellenlänge von 450 nm und mit rund 350 mW Leistung, Dauer 20 ms, defokussiert auf ca. 6 mm Beleuchtungsdurchmesser). Der Zeitnullpunkt für diese Messsequenz ist durch den Beginn des Aufladepulses gegeben.
2) 65 ms Wartezeit
3) Elf Pulse G (Puls G: Laserdiode mit einer Peak-Wellenlänge von 638nm und mit rund 300 mW Leistung, fokussiert, Pulsdauer 0.2 ms mit anschließend 0.3 ms Wartezeit vor dem nachfolgenden Puls G).
4) Wiederholen der Messsequenz mit einer Zyklusdauer von 100 ms.

Dabei zeigt Figur 4a zeigt das gemessene Detektorsignal S1 (in Volt) am OSP über die Zeit, Figur 4b zeigt den zeitlichen Verlauf des Trigger-Signals S2 für das Aufladen (entsprechend den Aufladepulsen) und Figur 4c zeigt den zeitlichen Verlauf des Trigger-Signals S3 für das Auslesen (entsprechend den Auslesepulsen). In Figur 5 ist die Auslesesequenz im Detail dargestellt, nämlich in Figur 5 a) der zeitliche Verlauf des Detektor-Signals S1 (Offset-behaftete Auslesekurve) und in b) der Verlauf des zugehörigen Trigger-Signals S3 (also die Auslesepulse) dargestellt. Als Echtheitskriterium dient beispielsweise die Form der Einhüllenden der Auslesekurve oder das Verhältnis der Signalintensitäten von erstem Auslesepuls zu letztem Auslesepuls.

Weitere Ausführungsbeispiele 7 bis 18

Weitere Stoffe 7 bis 18 wurden mit Flussmittel (Flux) gestützter Feststoffsynthese hergestellt. Die Herstellung folgt im Ablauf derjenigen von Stoff 3. Die Stoffe sind mit ihrer nominellen Zusammensetzung in der Tabelle 3 aufgelistet. Gesamtansatzmengen waren jeweils 20 g, wovon 10 g Flussmittel $K_2SO_4$ eingesetzt wurden. Als Quellen für die in der jeweiligen Stoffzusammensetzung angegebenen Elemente wurden die Rohstoffe aus Tabelle 4 verwendet.

Die Rohstoffe (vgl. Tabelle 4) wurden jeweils in der für die angegebenen Stoffzusammensetzungen nötigen Elementmenge zugegeben. Die Tabelle 4 zeigt einen Überblick der für die Stoffe 7 bis 18 verwendeten Rohstoffe.

**Tabelle 3**

| | |
|---|---|
| Stoff 7 | $La_{0.5}Gd_{2.54}Al_2Ga_3O_{12}:Ce_{0.005},Yb_{0.005}$ |
| Stoff 8 | $YGd_{2.02}Al_2Ga_3O_{12}: Ce_{0.04}, Bi_{0.01}, Mo_{0.005}$ |
| Stoff 9 | $La_{0.5}Gd_{2.52}Al_{2.5}Ga_{2.5}O_{12}: Ce_{0.04}, Bi_{0.01}, Mo_{0.005}$ |
| Stoff 10 | $Y_{0.5}Gd_{2.52}Al_{2.5}Ga_{2.5}O_{12} : Ce_{0.04}, Bi_{0.01}, Mo_{0.005}$ |
| Stoff 11 | $Y_{0.5}Gd_{2.425}Al_{2.475}Ga_{2.5}O_{12}: Ce_{0.04}, Bi_{0.03}, Mo_{0.03}$ |

(fortgesetzt)

| Stoff 12 | $Y_{0.5}Gd_{2.425}Al_{2.475}Ga_{2.5}O_{12}$: $Ce_{0.04}$, $Bi_{0.03}$, $Sn_{0.03}$ |
|---|---|
| Stoff 13 | $Gd_{2.98}Al_{2.45}Ga_{2.45}O_{12}$: $Ce_{0.01}$, $Bi_{0.01}$, $Ge_{0.1}$ |
| Stoff 14 | $La_{0.5}Gd_{2.54}Al_2Ga_3O_{12}$: $Ce_{0.02}$, $Hf_{0.005}$ |
| Stoff 15 | $La_{0.5}Gd_{2.481}Al_{1.996}Ga_3O_{12}$: $Ce_{0.02}$, $Zr_{0.005}$ |
| Stoff 16 | $La_{0.5}Gd_{2.4451}Al_{1.975}Ga_3O_{12}$: $Ce_{0.005}$, $Zr_{0.03}$ |
| Stoff 17 | $La_{0.5}Gd_{2.46}Al_{1.92}Ga_3O_{12}$: $Ce_{0.04}$, $Mo_{0.01}$ |
| Stoff 18 | $La_{0.5}Gd_{2.54}Al_2Ga_3O_{12}$:$Ce_{0.005}$, $Sn_{0.005}$ |

**Tabelle 4**

| Element des Rohstoffs | Formel |
|---|---|
| Al | $Al_2O_3$ |
| Bi | $Bi_5O(OH)_9(NO_3)_4$ |
| Ce | $Ce(SO_4)_2$ |
| Ga | $Ga_2O_3$ |
| Gd | $Gd_2O_3$ |
| Ge | $GeO_2$ |
| Hf | $HfO_2$ |
| La | $La_2O_3$ |
| Mo | $MoO_3$ |
| Nb | $Nb_2O_5$ |
| Sn | $SnO_2$ |
| Y | $Y_2O_3$ |
| Yb | $Yb_2O_3$ |
| Zr | $ZrCl_4$ |

Messungen für die Stoffe 7 bis 13

Für die obigen Stoffe 7 bis 13 wurden jeweils unterschiedliche Messungen gemäß einem Ausführungsbeispiel eines hier beschriebenen Verfahrens zum Prüfen durchgeführt, um die Wirkung von Änderungen in der Matrix des OSP, von Dotierstoffen und/oder deren Konzentrationen auf die Eigenschaften des OSP zu beschreiben.

Dazu wurden die jeweiligen Stoffe mit der folgenden Messsequenz (Sequenz 3) gemessen:

1) Aufladepuls (Laserdiode mit einer Peak-Wellenlänge von 450 nm und mit rund 400 mW Leistung, Dauer 20 ms, Spot ca. 3 mm Durchmesser). Der Zeitnullpunkt entspricht dem Beginn des Aufladepulses.
2) 23.6 ms Wartezeit nach Ende des Aufladepulses
3) Sechs Wiederholungen eines Pulspaares (ST):

Puls S: Laserdiode mit einer Peak-Wellenlänge von 638nm (rot) und mit rund 450 mW Leistung, fokussiert, Pulsdauer 0.2 ms mit anschließend 0.2 ms Wartezeit vor dem nachfolgenden Puls T
Puls T: Laserdiode mit einer Peak-Wellenlänge von 915 nm (NIR) und mit rund 500 mW Leistung, fokussiert, Pulsdauer 0.2 ms mit anschließend 0.2 ms Wartezeit.

4) Wiederholen der Messsequenz mit einer Zyklusdauer von 50 ms.

Die Tabelle 5 listet geeignete Messgrößen und ihre Definitionen auf. $I_N$ bezeichnet dabei die maximale Signalintensität des N-ten Auslesepulses der Messsequenz. Die hier angeführten Messgrößen veranschaulichen beispielhaft, wie die Daten einer Messsequenz ausgewertet werden können und sind keineswegs als vollständige Aufzählung einer Datenauswertung zu verstehen. Weitere Messgrößen können definiert und alternative Auswertemethoden (wie direkter Vergleich mit Solldaten, Anpassungen, Normierung auf intrinsische Signale) können vorgenommen werden. Tabelle 6 gibt einen Überblick über die in Tabelle 5 definierten Messgrößen für die Stoffe 7 bis 13.

**Tabelle 5**

| Messgröße | Beschreibung | Messung |
|---|---|---|
| $I_{max}$(Seq 3) | Maximales OSL-Signal | Sequenz 3 |
| SpeedNIR (Seq 3) | Auslesegeschwindigkeit bei NIR Auslesen unter Messsequenz 3 | Als Maß dient hier: $$SpeedNIR(Seq\,3) = \frac{I4-I2}{I12-I10}$$ |
| SpeedRED (Seq 3) | Auslesegeschwindigkeit bei rotem Auslesen unter Messsequenz 3 | Als Maß dient hier: $$SpeedRED(Seq\,3) = \frac{I3-I1}{I11-I9}$$ |
| Speed (Seq3) | Auslesegeschwindigkeit unter Messsequenz 3 | Als Maß dient hier: $$Speed(Seq\,3) = \frac{I2-I1}{I12-I11}$$ |
| Q | Spektrale Sensitivität als Signalverhältnis des ersten (roten) zum zweiten (NIR) Puls der Messsequenz 3 | Als Maß dient hier $Q = \frac{I_1(Seq\,3)}{I_2(Seq\,3)}$ |

**Tabelle 6**

| | Stoff 7 | Stoff 8 | Stoff 9 | Stoff 10 | Stoff 11 | Stoff 12 | Stoff 13 |
|---|---|---|---|---|---|---|---|
| $I_{max}$(Seq 3) [V] | 3.50 | 1.84 | 1.63 | 1.83 | 0.63 | 0.16 | 1.18 |
| SpeedNIR(Seq 3) | 1.19 | 1.87 | 2.27 | 2.38 | 1.81 | 1.81 | 1.33 |
| SpeedRED(Seq 3) | 3.70 | 2.45 | 2.65 | 2.85 | 2.15 | 1.99 | 1.81 |
| Speed(Seq3) | 1.82 | 2.29 | 2.24 | 2.47 | 1.70 | 1.25 | 1.38 |
| Q | 8.53 | 1.57 | 1.56 | 1.63 | 1.66 | 2.60 | 1.89 |

Für die Anwendungen erscheinen neben Stoff 7 (der ein hohes OSL-Signal $I_{max}$ aufweist, allerdings kaum auf die NIR-Anteile reagiert) auch die anderen Stoffe interessant, da sie auch mit den NIR-Pulsen signifikant auslesbar sind (im Parameter Q sichtbar) und dabei unterscheidbare Geschwindigkeiten aufweisen. Diese Stoffe zeigen beispielhaft Unterschiede in ihrer spektralen Sensitivität und in ihren Auslesegeschwindigkeiten.

Messungen für die Stoffe 7 und 14 bis 17

Für die obigen Stoffe 7 und 14 bis 17 wurden weitere Messungen gemäß einem Ausführungsbeispiel eines hier beschriebenen Verfahrens zur Prüfung durchgeführt, um die Wirkung von Änderungen in der Matrix des OSP, von Dotierstoffen und/oder deren Konzentrationen auf die Eigenschaften des OSP zu beschreiben.
Dazu wurden die jeweiligen Stoffe mit der folgenden Messsequenz (Sequenz 4) gemessen:

1) Aufladepuls (Laserdiode mit einer Peak-Wellenlänge von 450 nm und mit rund 350 mW Leistung, Dauer 20 ms, Spot ca. 6 mm Durchmesser). Der Zeitnullpunkt entspricht dem Beginn des Aufladepulses.
2) 23.6 ms Wartezeit nach Ende des Aufladepulses.
3) Zwölf Pulse U: (Laserdiode mit einer Peak-Wellenlänge von 638nm mit rund 400 mW Leistung, fokussiert, Pulsdauer 0.2 ms) mit anschließend 0.2 ms Wartezeit vor dem nachfolgenden Puls
4) Wiederholen der Messsequenz mit einer Zyklusdauer von 50 ms.

Die Tabelle 7 listet geeignete Messgrößen und ihre Definitionen auf. $I_N$ bezeichnet dabei die maximale Signalintensität des N-ten Auslesepulses der Messsequenz. Tabelle 8 gibt einen Überblick über die in Tabelle 7 definierten Messgrößen für die Stoffe 7 (als Referenz) und 14 bis 17.

**Tabelle 7**

| Messgröße | Beschreibung | Messung |
|---|---|---|
| $I_{max}$(Seq 4) | Maximales OSL-Signal (willkürliche Einheiten) unter fokussiertem Ausleselicht bei 638 nm | Messsequenz 4, je Puls Bestimmung des Maximalwertes (geglättet aus 20 Einzelwerten um das Maximum) |
| v(Seq 4) | Auslesegeschwindigkeit unter Messsequenz 4 | Messsequenz 4, als Maß dient hier: $$v(Seq\ 4) = \frac{1}{I_1}\frac{I_1 + I_{11} - 2I_6}{25} * 100$$ |
| Speed(Seq 4) | Alternative Beschreibung der Auslesegeschwindigkeit unter Messsequenz 4 | Messsequenz 4, als Maß dient hier: $$Speed(Seq\ 4) = \frac{I3 - I1}{I12 - I10}$$ |

**Tabelle 8**

| Stoff | $I_{max}$(Seq 4) | v(Seq 4) | Speed(Seq 4) |
|---|---|---|---|
| Stoff 7 | 0.67 | 2.00 | 5.11 |
| Stoff 14 | 0.34 | 2.50 | 6.74 |
| Stoff 15 | 3.46 | 3.05 | 18.26 |
| Stoff 16 | 0.82 | 1.44 | 7.22 |
| Stoff 17 | 0.19 | 1.96 | 3.89 |

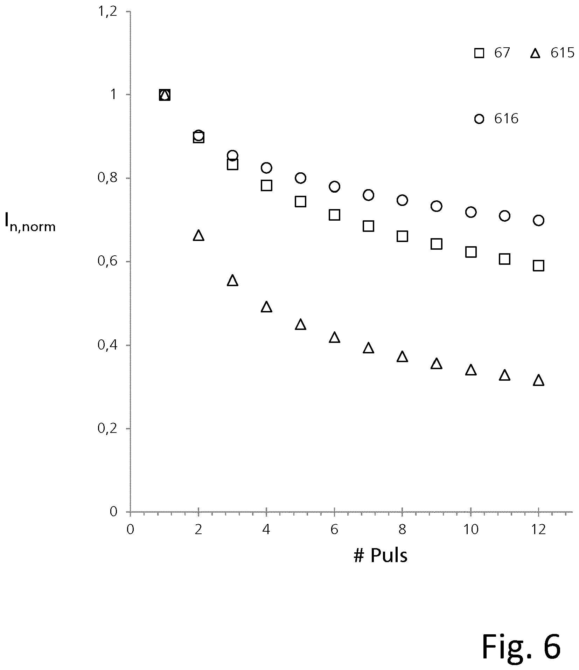

In der Figur 6 sind normierte Auslesekurven für den Stoff 7 (Bezugszeichen 67), den Stoff 15 (Bezugszeichen 615) und den Stoff 16 (Bezugszeichen 616) dargestellt, wobei für jeden Auslesepuls der Sequenz 4 das maximale Signal $I_{N,norm}$ des Pulses N gegen die Pulsnummer N aufgetragen ist. Die Kurven sind jeweils auf das Signal des ersten Pulses normiert. Dieses Beispiel verdeutlicht die Auswirkung der Zusammensetzung des OSP auf seine Eigenschaften wie hier beispielhaft in den Messwerten (Tabellen 7 und 8) beziehungsweise auch im direkten Vergleich der Auslesekurve (Figur 6) sichtbar wird. Insbesondere am Vergleich der Auslesekurve für Stoff 15 (Bezugszeichen 615) und 16 (Bezugszeichen 616) wird deutlich, dass kleine Änderungen in der Zusammensetzung die Defektstruktur des Stoffes maßgeblich verändern, was sich in der deutlichen Änderung charakteristischer Messgrößen (beispielsweise wie in den Tabellen 7 und 8) und/oder Auslesekurven (wie beispielsweise in Figur 6) manifestiert: die Auslesegeschwindigkeiten und die Auslesekurven der einzelnen Stoffe weichen signifikant voneinander ab.

Messungen für die Stoffe 3, 7, 13 und 16

Für die Stoffe 3, 7 und 13 sowie für Stoff 16 wurden weitere Messungen gemäß einem Ausführungsbeispiel eines hier beschriebenen Verfahrens zum Prüfen durchgeführt, um Eigenschaften der Stoffe zu ermitteln, die die Auslesbarkeit im nahen UV-Bereich beispielhaft vergleichen.

Die Messungen wurden zunächst mit der folgenden Messsequenz (Sequenz 5) durchgeführt:

1) Aufladepuls (Laserdiode mit einer Peak-Wellenlänge von 450 nm mit rund 300 mW Leistung, Dauer 20 ms, Spot ca. 3 mm Durchmesser). Der Zeitnullpunkt entspricht dem Beginn des Aufladepulses.
2) 80.252 ms Wartezeit nach Ende des Aufladepulses.
3) Zwölf Pulse Z: Laserdiode mit einer Peak-Wellenlänge von 398 nm mit rund 280 mW Leistung, fokussiert, Pulsdauer 0.2 ms mit anschließend 0.2 ms Wartezeit vor dem nachfolgenden Puls.
4) Wiederholen der Messsequenz mit einer Zyklusdauer von 100 ms.

Zusätzlich wurde dann die folgende Messsequenz (Sequenz 6) herangezogen:

1) Aufladepuls (Laserdiode mit einer Peak-Wellenlänge von 450 nm mit rund 300 mW Leistung, Dauer 20 ms, Spot ca. 3 mm Durchmesser). Der Zeitnullpunkt entspricht dem Beginn des Aufladepulses.

2) 43.841 ms Wartezeit nach Ende des Aufladepulses.

3) 6 Wiederholungen eines Pulspaares (SZ):

Puls S: Laserdiode mit einer Peak-Wellenlänge von 638nm mit rund 450 mW Leistung, fokussiert, Pulsdauer 0.2 ms mit anschließend 0.2 ms Wartezeit vor dem nachfolgenden Puls Z.

Puls Z: Laserdiode mit einer Peak-Wellenlänge von 398nm mit rund 280 mW Leistung, fokussiert, Pulsdauer 0.2 ms mit anschließend 0.2 ms Wartezeit vor dem nachfolgenden Puls S.

4) Wiederholen der Messsequenz mit einer Zyklusdauer von 50 ms.

Die Tabelle 9 listet geeignete Messgrößen und ihre Definitionen für die Sequenzen 5 und 6 auf. $I_N$ bezeichnet dabei die maximale Signalintensität des N-ten Auslesepulses der jeweiligen Messsequenz. Tabelle 10 enthält eine Liste mit den in Tabelle 9 definierten Messgrößen für die Stoffe 3, 7 und 13 sowie 16.

**Tabelle 9**

| Messgröße | Beschreibung | Messung |
|---|---|---|
| Speed(Seq 5) | Alternative Beschreibung der Auslesegeschwindigkeit unter Messsequenz 5 | Messsequenz 5, als Maß dient hier: $$Speed(Seq\,5) = \frac{I3-I1}{I12-I10}$$ |
| $I_{rel}$(Seq 6) | Relative Signalintensität des ersten Pulses bei 638 nm Auslesen zur Intensität des ersten Pulses bei 405 nm Auslesen | Messsequenz 6, als Maß dient hier: $$I_{rel}(Seq\,6) = \frac{I_1}{I_2}$$ |

**Tabelle 10**

| Stoff | Speed(Seq5) | $I_{rel}$(Seq 6) |
|---|---|---|
| Stoff 3 | 1.9 | 0.46 |
| Stoff 7 | 22.8 | 0.73 |
| Stoff 13 | 12.1 | 0.60 |
| Stoff 16 | Nicht bestimmt | 1.41 |

Beispielhaft zeigen diese Stoffe unterschiedliche spektrale Sensitivitäten, die sich nicht nur in Intensitätsverhältnissen sondern auch in Auslesegeschwindigkeiten feststellen lassen, wie aus den Werten in Tabelle 10 folgt.

Messungen für den Stoff 18

Stoff 18 zeigt vor allem bei 398 nm eine effiziente Auslesbarkeit, während er im roten und NIR Spektralbereich kaum auslesbar ist. Für den Nachweis wurde Stoff 18 der Messsequenz 6 sowie einer weiteren Messsequenz 7 unterworfen und die Daten ausgewertet.

Die verwendete Messsequenz (Sequenz 7) ergibt sich wie folgt:

1) Aufladepuls (Laserdiode mit einer Peak-Wellenlänge von 450 nm mit rund 300 mW Leistung, Dauer 20 ms, Spot ca. 3 mm Durchmesser). Der Zeitnullpunkt entspricht dem Beginn des Aufladepulses.

2) 43.841 ms Wartezeit nach Ende des Aufladepulses.

3) 6 Wiederholungen eines Pulspaares (TZ):

Puls T: Laserdiode mit einer Peak-Wellenlänge von 915 nm mit rund 500 mW Leistung, fokussiert, Pulsdauer 0.2 ms mit anschließend 0.2 ms Wartezeit vor dem nachfolgenden Puls Z.

Puls Z: Laserdiode mit einer Peak-Wellenlänge von 398nm mit rund 280 mW Leistung, fokussiert, Pulsdauer 0.2 ms mit anschließend 0.2 ms Wartezeit vor dem nachfolgenden Puls T.

4) Wiederholen der Messsequenz mit einer Zyklusdauer von 50 ms.

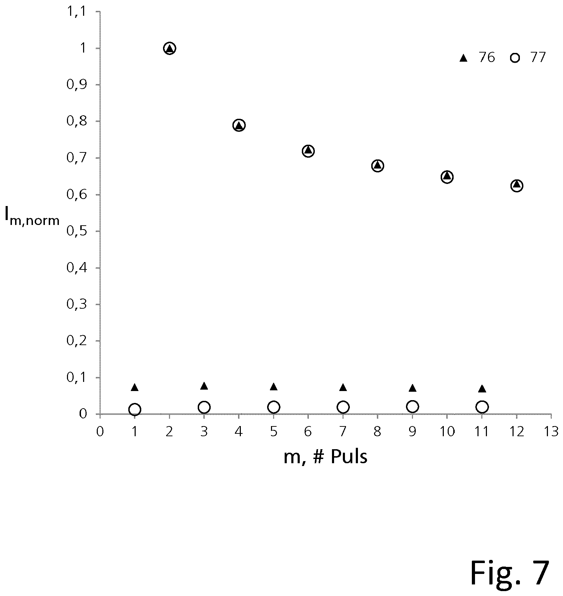

Der Vergleich der Messungen des Stoffs 18 für die Sequenz 6 (Bezugszeichen 76) und die Sequenz 7 (Bezugszeichen 77) ist in der Figur 7 dargestellt. Die Figur 7 zeigt eine Folge des jeweiligen maximalen normierten Signals $I_{m,norm}$ des m-ten Auslesepulses als Funktion der Nummer m des Auslesepulses. Gerade Pulsnummern (obere Messwerte) entsprechen jeweils Pulsen vom Typ Z, also einer Wellenlänge des Ausleselichts von 398 nm, während ungerade Pulsnummern (untere Messwerte mit einer Intensität unter 0.1) einer Wellenlänge des Ausleselichts von 638 nm (Typ S, Messsequenz 6) bzw. 915 nm (Typ T, Messsequenz 7) entsprechen. Pulstyp Z ist also in der Lage, den Stoff 18 auszulesen, während für Pulstyp S und T die Signale unter 0.1 verbleiben. Es geht hervor, dass sich der Stoff 18 vor allem bei einer Wellenlänge von 398 nm auslesen lässt, d.h. bei einer Wellenlänge kürzer als die Emissionswellenlänge und sogar kürzer als die bevorzugte Wellenlänge des Aufladelichts von rund 450 nm.

Weitere Ausführungsbeispiele: Stoffe 19, 20 und 21

Anhand der weiteren Ausführungsbeispiele der Stoffe 19, 20 und 21 soll der Einfluss von geringen Änderungen der chemischen Zusammensetzung der Granatmatrix auf die Eigenschaften des OSP untersucht werden. Gesamtansatzmengen waren jeweils 20g, wovon 10g Flussmittel $K_2SO_4$ eingesetzt wurden. Als Quellen für die in der jeweiligen Stoffzusammensetzung angegebenen Elemente wurden die Rohstoffe aus Tabelle 4 verwendet. Die Rohstoffe wurden jeweils in der für die angegebenen Stoffzusammensetzungen nötigen Elementmenge zugegeben.

Die Stoffe 19, 20 und 21 wurden mit Flussmittel (Flux) gestützter Feststoffsynthese hergestellt. Die Herstellung folgt im Ablauf derjenigen von Stoff 3. Die nominelle Zusammensetzung der Stoffe lautet:

Stoff 19: $Gd_{2.995}Al_2Ga_{2.993}O_{12}: Ce_{0.005}, Zr_{0.005};$
Stoff 20: $La_{0.5}Gd_{2.495}Al_2Ga_{2.993}O_{12}: Ce_{0.005}, Zr_{0.005};$
Stoff 21: $La_{0.5}Gd_{2.53}Al_2Ga_{2.993}O_{12}: Ce_{0.005}, Zr_{0.005}.$

Stoff 19 enthält kein Lanthan, Stoff 20 ist eine annähernd stöchiometrischer Formulierung, während Stoff 21 einen deutlichen Überschuss an Seltenerd-Elementen (hier: Gd) aufweist.

Diese drei Stoffe werden mit einer Messsequenz gemäß einem Ausführungsbeispiel eines hier beschriebenen Verfahrens verglichen. Die Messsequenz (Sequenz 8) ist wie folgt aufgebaut:

1) Aufladepuls (Laserdiode mit einer Peak-Wellenlänge von 450 nm mit rund 350 mW Leistung, Dauer 3.5 ms, Spot ca. 5 mm Durchmesser). Der Zeitnullpunkt entspricht dem Beginn des Aufladepulses.
2) 1.52 ms Wartezeit nach Ende des Aufladepulses.
3) Zwölf Pulse V (Puls V: Laserdiode mit einer Peak-Wellenlänge 638nm mit rund 1600 mW Leistung, beleuchteter rechteckiger Fleck auf der Probe ca. 1mm x 4mm, Pulsdauer 0.2 ms mit anschließend 0.2 ms Wartezeit vor dem nachfolgenden Puls V). Der Zeitnullpunkt für diese Auslesesequenz ist durch den Beginn des ersten Auslesepulses gegeben
4) Wiederholen der Messsequenz mit einer Zyklusdauer von 10 ms.

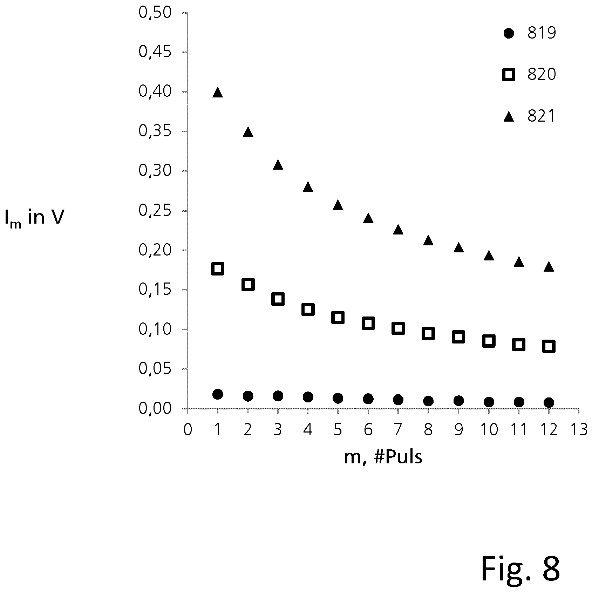

Vergleichend sind für die drei Stoffe die maximalen Signalwerte $I_m$ für jeden Auslesepuls m als Auslesekurven in Figur 8 dargestellt.

Die Wirkung der Lanthan-Kodotierung sieht man im Vergleich der Signale zum jeweils 1. Auslesepuls. Stoff 19 (Bezugszeichen 819) zeigt kaum ein OSL-Signal (hier 33 mV wobei rund 15 mV bereits von der Restdurchlässigkeit der verwendeten Filter stammen), während das maximale Signal unter gleichen Bedingungen für Stoff 20 (Bezugszeichen 820) rund 190 mV beträgt. Für Stoff 19 kann keine vertrauenswürdige Auslesegeschwindigkeit angegeben werden, da das Signal kaum Variation aufweist. Bei Stoff 20 geht unter der Messsequenz 8 das Signal von 100% (1. Auslesepuls) auf 49% Prozent (12. Puls) zurück. Bei Stoff 21 (Bezugszeichen 821) führt der Überschuss an Seltenerd-Elementen (hier: Gd) unter Sequenz 8 zu einer weiter gesteigerten initialen Intensität der OSL von 415 mV. Zugleich beträgt das auf den jeweils maximalen Auslesepuls normierte Signal zwischen zwei Auslesepulsen (d.h. ohne Bestrahlung mit Licht) für Stoff 21 nur noch rund 60% dessen von Stoff 20 (nicht gezeigt), was ein reduziertes Nachleuchten anzeigt.

Durch Änderungen der Defektstruktur, die wie hier beispielsweise durch geringe Änderung an der Zusammensetzung des Wirtsgitters (Einführen von La) und/oder durch geringes Abweichen von der nominellen Ladungsneutralität (Überschuss Gd) bewirkt werden, gelingt es, deutlich messbare Unterschiede in den Eigenschaften, beispielsweise hier Gedächtnisstärke und Auslesegeschwindigkeit, zu erzielen. Gleichzeitig können unerwünschte Eigenschaften wie Nachleuchten unterdrückt werden. Gerade dieses Beispiel betont, dass die Defektstruktur Teil des Stoffes ist.

Die Erfindung ist nicht durch die Beschreibung anhand der Ausführungsbeispiele auf diese beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

**Patentansprüche**

1. Echtheitsmerkmal mit einem optischen Speicherleuchtstoff basierend auf einer Granatstruktur und mit der folgenden Zusammensetzung:

$$( Gd_xLn_y ) ( Ga_mAl_nA_k ) O_{12\pm d} : Ce_p Q_q R_r T_t,$$

wobei

- Ln zumindest eines der folgenden Elemente umfasst: La, Lu, Y;
- A zumindest eines der folgenden Elemente umfasst: Ge, Sc, Si;
- Q zumindest eines der folgenden Elemente umfasst: Ag, Cr, Hf, Mo, Nb, Sn, Ta, Ti, W, Zr;
- R zumindest eines der folgenden Elemente umfasst: Bi, Pr, Nd, Sm, Eu, Tb, Dy, Ho, Er, Tm, Yb;
- T zumindest eines der folgenden Elemente umfasst: B, F, Li, Mg, K, Na;
- $1.0 \leq x \leq 3.2$ und $0 \leq y \leq 1.65$ ;
- $0.5 \leq m \leq 5.2$, $0 \leq n \leq 4.7$ und $0 \leq k \leq 0.5$, wobei $4.8 \leq m+n+k \leq 5.2$;
- $0 \leq p \leq 0.1$, wobei p=0 nur für Q=Zr;
- $0 \leq q \leq 0.05$;
- $0 \leq r \leq 0.05$;
- $0 \leq t \leq 0.1$;
- $0 \leq d \leq 0.5$;
- p+q > 0.002;
- q+r > 0.002; und
- $2.8 \leq x+y+p+r \leq 3.2$.

2. Echtheitsmerkmal nach einem der vorherigen Ansprüche, wobei 0<q, vorzugsweise 0.0005<q bevorzugt 0.001<q, und/ oder 0<r, vorzugsweise 0.,0005<r, bevorzugt 0.001<r, beträgt.

3. Echtheitsmerkmal nach Anspruch 2, wobei Ce, Q und/ oder R zwei eigenständige optische Systeme bilden, die durch wenigstens zweistufigen externen Energieeintrag in ihren Ausgangszustand überführbar sind.

4. Echtheitsmerkmal nach einem der vorherigen Ansprüche,

- wobei der optische Speicherleuchtstoff durch Lichteinstrahlung auslesbar ausgebildet ist,
- wobei ein Auslesespektrum des optischen Speicherleuchtstoffs ein Maximum in einem Wellenlängenbereich von wenigstens 360 nm bis höchstens 1200 nm aufweist und
- wobei vorzugsweise die optisch stimulierte Lumineszenz des optischen Speicherleuchtstoffs im Wellenlängenbereich von 500 nm bis 600 nm ein Emissionsmaximum aufweist.

5. Echtheitsmerkmal nach einem der vorherigen Ansprüche, wobei der optische Speicherleuchtstoff wenigstens eine der folgenden Eigenschaften aufweist:

- Abklingzeit einer intrinsischen Lumineszenz des optischen Speicherleuchtstoffs von höchstens 100 $\mu$s;
- Auslesespektrum mit wenigstens zwei Maxima;
- Aufladespektrum mit einem Maximum bei einer Wellenlänge von wenigstens 300 nm.

6. Echtheitsmerkmal nach einem der vorherigen Ansprüche, wobei

- Ln Lanthan (La) oder Yttrium (Y) ist und
- Q Zirconium (Zr) oder Zinn (Sn) ist, mit:
- $0.002 \leq p \leq 0.08$;
- $0.002 \leq q \leq 0.05$;
- r = 0;
- $k = 0$, $n \leq 3$;

- und $t \leq 0.05$.

7. Echtheitsmerkmal nach Anspruch 1 oder 2, wobei

   - Ln Lanthan (La) oder Yttrium (Y) ist und
   - Q Zirconium (Zr) ist, mit
   - $p = 0$;
   - $0.002 \leq q \leq 0.02$;
   - $r = 0$;
   - $k = 0, n \leq 3$;
   - und $t \leq 0.05$.

8. Echtheitsmerkmal nach einem der Ansprüche 1 bis 5, wobei

   - Ln Lanthan (La) oder Yttrium (Y) ist und
   - Q Zirconium (Zr) oder Molybdän (Mo) ist,
   - R Bismut (Bi) ist, mit
   - $0.005 \leq p \leq 0.08$;
   - $0.002 \leq q \leq 0.05$;
   - $0.002 \leq r \leq 0.05$;
   - $k = 0, n \leq 3$;
   - und $t \leq 0.05$.

9. Echtheitsmerkmal nach einem der Ansprüche 1 bis 5, wobei

   - Ln Lanthan (La) ist;
   - R Thulium (Tm) oder Ytterbium (Yb) ist und
   - Q Silber (Ag) und/oder Zirconium (Zr) ist, mit
   - $0.005 \leq p \leq 0.08$
   - $0.002 \leq r \leq 0.05$;
   - $k = 0, n \leq 3$;
   - und $t \leq 0.05$.

10. Echtheitsmerkmal nach einem der Ansprüche 1 bis 5, wobei

    - Ln Lanthan (La) oder Yttrium (Y) ist,
    - Q Zirconium (Zr), Molybdän (Mo) oder Zinn (Sn) ist und
    - R Bismut (Bi) ist, wobei
    - $0.1 \leq y \leq 1$;
    - $0.005 \leq p \leq 0.08$;
    - $0.002 \leq q \leq 0.05$;
    - $k = 0$;
    - $t \leq 0.05$;
    - $0 \leq n \leq 3.5; 1.5 \leq m \leq 5$;
    - und $m+n+5q/6 = 5$
    - sowie $2.95 \leq x+y+p+r+q/6 \leq 3.1$ sind.

11. Echtheitsmerkmal nach Anspruch 10, wobei

    - Q Molybdän (Mo) oder Zirconium (Zr) ist, wobei
    - $0.005 \leq q \leq 0.05$;
    - und $t=0$ und/oder $r=0$ sind.

12. Verfahren zum Prüfen eines Echtheitsmerkmals mit einem optischen Speicherleuchtstoff nach einem der vorherigen Ansprüche, umfassend die folgenden Schritte:

    a) Beaufschlagen des optischen Speicherleuchtstoffs mit einem optischen Aufladepuls und/oder einem optischen Auslesepuls;

b) Erfassen eines Messwertes zu einer optischen Emission des optischen Speicherleuchtstoffs in Reaktion auf den Aufladepuls und/oder den Auslesepuls;

c) Echtheitsbewertung des Sicherheitsmerkmals anhand des Messwerts.

**13.** Verfahren nach Anspruch 12, wobei Schritt b) ferner ein Auswerten des Messwerts zur Bestimmung einer Gedächtniseigenschaft des Speicherleuchtstoffes umfasst und wobei die Echtheitsbewertung in Schritt c) anhand des Ergebnisses dieser Auswertung erfolgt.

**14.** Verfahren nach einem Ansprüche 12 oder 13, wobei Schritt b) ferner zumindest einen der folgenden Schritte beinhaltet:

- Bestimmen und Auswerten von einem Parameter des Aufladepulses und/oder Auslesepulses;
- Bestimmen und Auswerten eines zur Erfassung des Messwertes genutzten Messparameters;
- Bestimmen und Auswerten einer Hintergrundstrahlung;
- Bestimmen und Auswerten einer zeitlichen Beziehung zwischen dem Aufladepuls und/oder dem Auslesepuls und der Erfassung des Messwerts.

**15.** Verfahren nach einem der Ansprüche 13 bis 15, wobei der optische Speicherleuchtstoff Fallenzentren und Leuchtzentren aufweist, wobei

- sich in dem optischen Speicherleuchtstoff vorhandene Ladungsträger vor Schritt a) zumindest teilweise in den Fallenzentren befinden und
- die Ladungsträger durch den Aufladepuls von den Leuchtzentren zumindest teilweise in die Fallenzentren übergehen und/oder durch den Auslesepuls von den Fallenzentren zumindest teilweise in die Leuchtzentren übergehen und in den Leuchtzentren strahlend relaxieren.

**16.** Verfahren nach einem der Ansprüche 13 bis 16, wobei eine elektrische Leitfähigkeit des optischen Speicherleuchtstoffs während des Beaufschlagens mit dem Aufladepuls und/oder dem Auslesepuls in Schritt a) höher ist als außerhalb des Beaufschlagens.

**Claims**

**1.** Authenticity feature with an optical storage phosphor based on a garnet structure and with the following composition:

$$(Gd_x Ln_y) (Ga_m Al_n A_k) O_{12 \pm d} : Ce_p Q_q R_r T_t,$$

where

- Ln comprises at least one of the following elements: La, Lu, Y;
- A comprises at least one of the following elements: Ge, Sc, Si;
- Q comprises at least one of the following elements: Ag, Cr, Hf, Mo, Nb, Sn, Ta, Ti, W, Zr;
- R comprises at least one of the following elements: Bi, Pr, Nd, Sm, Eu, Tb, Dy, Ho, Er, Tm, Yb;
- T comprises at least one of the following elements: B, F, Li, Mg, K, Na;
- $1.0 \leq x \leq 3.2$ and $0 \leq y \leq 1.65$;
- $0.5 \leq m \leq 5.2$, $0 \leq n \leq 4.7$ and $0 \leq k \leq 0.5$, where $4.8 \leq m+n+k \leq 5.2$;
- $0 \leq p \leq 0.1$, where p = 0 only for Q = Zr;
- $0 \leq q \leq 0.05$;
- $0 \leq r \leq 0.05$;
- $0 \leq t \leq 0.1$;
- $0 \leq d \leq 0.5$;
- $p+q > 0.002$;
- $q+r > 0.002$; and
- $2.8 \leq x+y+p+r \leq 3.2$.

**2.** Authenticity feature according to any of the preceding claims, where $0 < q$, preferably $0.0005 < q$, more preferably $0.001 < q$, and/or $0 < r$, preferably $0.0005 < r$, more preferably $0.001 < r$.

3. Authenticity feature according to Claim 2, wherein Ce, Q and/or R form two independent optical systems which can be converted into their initial state by at least two-stage external energy input.

4. Authenticity feature according to any of the preceding claims,

   - where the optical storage phosphor is configured such that it can be read out by light irradiation,
   - where a readout spectrum of the optical storage phosphor has a maximum in a wavelength range from at least 360 nm to at most 1200 nm, and
   - where preferably the optically stimulated luminescence of the optical storage phosphor has an emission maximum in the wavelength range from 500 nm to 600 nm.

5. Authenticity feature according to any of the preceding claims, where the optical storage phosphor has at least one of the following properties:

   - decay time of an intrinsic luminescence of the optical storage phosphor of at most 100 ps;
   - readout spectrum having at least two maxima;
   - charging spectrum with a maximum at a wavelength of at least 300 nm.

6. Authenticity feature according to any of the preceding claims, where

   - Ln is lanthanum (La) or yttrium (Y) and
   - Q is zirconium (Zr) or tin (Sn), with:
   - $0.002 \leq p \leq 0.08$;
   - $0.002 \leq q \leq 0.05$;
   - $r = 0$;
   - $k = 0$, $n \leq 3$;
   - and $t \leq 0.05$.

7. Authenticity feature according to Claim 1 or 2, where

   - Ln is lanthanum (La) or yttrium (Y) and
   - Q is zirconium (Zr), with
   - $p = 0$;
   - $0.002 \leq q \leq 0.02$;
   - $r = 0$;
   - $k = 0$; $n \leq 3$;
   - and $t \leq 0.05$.

8. Authenticity feature according to any of Claims 1 to 5, where

   - Ln is lanthanum (La) or yttrium (Y) and
   - Q is zirconium (Zr) or molybdenum (Mo),
   - R is bismuth (Bi), with
   - $0.005 \leq p \leq 0.08$;
   - $0.002 \leq q \leq 0.05$;
   - $0.002 \leq r \leq 0.05$;
   - $k = 0$, $n \leq 3$;
   - and $t \leq 0.05$.

9. Authenticity feature according to any of Claims 1 to 5, where

   - Ln is lanthanum (La);
   - R is thulium (Tm) or ytterbium (Yb) and
   - Q is silver (Ag) and/or zirconium (Zr), with
   - $0.005 \leq p \leq 0.08$;
   - $0.002 \leq r \leq 0.05$;
   - $k = 0$, $n \leq 3$;
   - and $t \leq 0.05$.

10. Authenticity feature according to any of Claims 1 to 5, where

- Ln is lanthanum (La) or yttrium (Y),
- Q is zirconium (Zr), molybdenum (Mo) or tin (Sn) and
- R is bismuth (Bi), where
- $0.1 \leq y \leq 1$;
- $0.005 \leq p \leq 0.08$;
- $0.002 \leq q \leq 0.05$;
- $k = 0$;
- $t \leq 0.05$;
- $0 \leq n \leq 3.5$; $1.5 \leq m \leq 5$;
- and $m+n+5q/6 = 5$
- and also $2.95 \leq x+y+p+r+q/6 \leq 3.1$.

11. Authenticity feature according to Claim 10, where

- Q is molybdenum (Mo) or zirconium (Zr), where
- $0.005 \leq q \leq 0.05$;
- and $t = 0$ and/or $r = 0$.

12. Method for checking an authenticity feature with an optical storage phosphor according to any of the preceding claims, comprising the following steps:

a) subjecting the optical storage phosphor to an optical charging pulse and/or an optical readout pulse;
b) capturing a measured value for an optical emission of the optical storage phosphor in response to the charging pulse and/or the readout pulse;
c) appraising the authenticity of the security feature on the basis of the measured value.

13. Method according to Claim 12, where step b) further comprises evaluating the measured value for determining a memory property of the storage phosphor, and where the authenticity appraisal in step c) is made on the basis of the result of this evaluation.

14. Method according to Claim 12 or 13, where step b) further includes at least one of the following steps:

- determining and evaluating a parameter of the charging pulse and/or readout pulse;
- determining and evaluating a measurement parameter utilized for capturing the measured value;
- determining and evaluating a background radiation;
- determining and evaluating a temporal relationship between the charging pulse and/or the readout pulse and the capturing of the measured value.

15. Method according to any of Claims 13 to 15, where the optical storage phosphor has trap centres and luminescence centres, where

- charge carriers present in the optical storage phosphor are located, before step a), at least partly in the trap centres, and
- as a result of the charge pulse, the charge carriers transition from the luminescence centres at least partly into the trap centres and/or, as a result of the readout pulse, the charge carriers transition from the trap centres at least partly into the luminescence centres and relax radiatively in the luminescence centres.

16. Method according to any of Claims 13 to 16, where an electrical conductivity of the optical storage phosphor during subjection to the charging pulse and/or the readout pulse in step a) is higher than outside the subjection.


**Revendications**

1. Caractéristique d'authenticité avec un luminophore de stockage optique basé sur une structure de type grenat et comportant la composition suivante :

$$( Gd_xLn_y ) ( Ga_mAl_nA_k ) O_{12\pm d} : Ce_p Q_q R_r T_t,$$

- Ln comprenant au moins l'un des éléments suivants : La, Lu, Y ;
- A comprenant au moins l'un des éléments suivants : Ge, Sc, Si ;
- Q comprenant au moins l'un des éléments suivants : Ag, Cr, Hf, Mo, Nb, Sn, Ta, Ti, W, Zr ;
- R comprenant au moins l'un des éléments suivants : Bi, Pr, Nd, Sm, Eu, Tb, Dy, Ho, Er, Tm, Yb ;
- T comprenant au moins l'un des éléments suivants : B, F, Li, Mg, K, Na ;
- $1{,}0 \leq x \leq 3{,}2$ et $0 \leq y \leq 1{,}65$ ;
- $0{,}5 \leq m \leq 5{,}2$, $0 \leq n \leq 4{,}7$ et $0 \leq k \leq 0{,}5$, $4{,}8 \leq m + n + k \leq 5{,}2$ ;
- $0 \leq p \leq 0{,}1$, $p = 0$ seulement pour Q = Zr ;
- $0 \leq q \leq 0{,}05$ ;
- $0 \leq r \leq 0{,}05$ ;
- $0 \leq t \leq 0{,}1$ ;
- $0 \leq d \leq 0{,}5$ ;
- $p + q > 0{,}002$ ;
- $q + r > 0{,}002$ ; et
- $2{,}8 \leq x + y + p + r \leq 3{,}2$.

2. Caractéristique d'authenticité selon l'une quelconque des revendications précédentes, $0 < q$, de préférence $0{,}0005 < q$, préférablement $0{,}001 < q$, et/ou $0 < r$, de préférence $0{,}0005 < r$, préférablement $0{,}001 < r$.

3. Caractéristique d'authenticité selon la revendication 2, Ce, Q et/ou R formant deux systèmes optiques indépendants, qui peuvent être convertis à leur état initial par apport d'énergie externe au moins en deux stades.

4. Caractéristique d'authenticité selon l'une quelconque des revendications précédentes,

   - le luminophore de stockage optique étant conçu de manière à pouvoir être lu par irradiation lumineuse,
   - un spectre de lecture du luminophore de stockage optique présentant un maximum dans un domaine de longueurs d'onde d'au moins 360 nm à au plus 1 200 nm et
   - de préférence la luminescence optiquement stimulée du luminophore de stockage optique présentant un maximum d'émission dans un domaine de longueurs d'onde de 500 nm à 600 nm.

5. Caractéristique d'authenticité selon l'une quelconque des revendications précédentes, le luminophore de stockage optique présentant au moins l'une des caractéristiques suivantes :

   - un temps de décroissance d'une luminescence intrinsèque du luminophore de stockage optique d'au plus 100 $\mu$s ;
   - un spectre de lecture comportant au moins deux maxima ;
   - un spectre de charge comportant un maximum à une longueur d'onde d'au moins 300 nm.

6. Caractéristique d'authenticité selon l'une quelconque des revendications précédentes,

   - Ln étant le lanthane (La) ou l'yttrium (Y) et
   - Q étant le zirconium (Zr) ou l'étain (Sn), avec :
   - $0{,}002 \leq p \leq 0{,}08$ ;
   - $0{,}002 \leq q \leq 0{,}05$ ;
   - $r = 0$ ;
   - $k = 0$, $n \leq 3$ ;
   - et $t \leq 0{,}05$.

7. Caractéristique d'authenticité selon la revendication 1 ou 2,

   - Ln étant le lanthane (La) ou l'yttrium (Y) et
   - Q étant le zirconium (Zr), avec
   - $p = 0$ ;
   - $0{,}002 \leq q \leq 0{,}02$ ;
   - $r = 0$ ;
   - $k = 0$, $n \leq 3$ ;

- et t ≤ 0,05.

8.  Caractéristique d'authenticité selon l'une quelconque des revendications 1 à 5,

    - Ln étant le lanthane (La) ou l'yttrium (Y) et
    - Q étant le zirconium (Zr) ou le molybdène (Mo),
    - R étant le bismuth (Bi), avec
    - 0, 005 ≤ p ≤ 0,08 ;
    - 0, 002 ≤ q ≤ 0,05 ;
    - 0, 002 ≤ r ≤ 0,05 ;
    - k = 0, n ≤ 3 ;
    - et t ≤ 0,05.

9.  Caractéristique d'authenticité selon l'une quelconque des revendications 1 à 5,

    - Ln étant le lanthane (La) ;
    - R étant le thulium (Tm) ou l'ytterbium (Yb) et
    - Q étant l'argent (Ag) et/ou le zirconium (Zr), avec
    - 0, 005 ≤ p ≤ 0,08 ;
    - 0.002 ≤ r ≤ 0.05 ;
    - k = 0, n ≤ 3 ;
    - et t ≤ 0,05.

10. Caractéristique d'authenticité selon l'une quelconque des revendications 1 à 5,

    - Ln étant le lanthane (La) ou l'yttrium (Y),
    - Q étant le zirconium (Zr), le molybdène (Mo) ou l'étain (Sn) et
    - R étant le bismuth (Bi),
    - 0,1 ≤ y ≤ 1 ;
    - 0, 005 ≤ p ≤ 0,08 ;
    - 0, 002 ≤ q ≤ 0,05 ;
    - k = 0 ;
    - t ≤ 0,05 ;
    - 0 ≤ n ≤ 3,5 ; 1,5 ≤ m ≤ 5 ;
    - et m + n + 5q/6 = 5
    - ainsi que 2,95 ≤ x + y + p + r + q/6 ≤ 3,1.

11. Caractéristique d'authenticité selon la revendication 10,

    - Q étant le molybdène (Mo) ou le zirconium (Zr),
    - 0,005 ≤ q ≤ 0,05 ;
    - et t = 0 et/ou r = 0.

12. Procédé pour vérifier une caractéristique d'authenticité avec un luminophore de stockage optique selon l'une quelconque des revendications précédentes, comprenant les étapes suivantes :

    a) soumission du luminophore de stockage optique à une impulsion de charge optique et/ou à une impulsion de lecture optique ;
    b) capture d'une valeur de mesure pour une émission optique du luminophore de stockage optique en réaction à l'impulsion de charge et/ou à l'impulsion de lecture ;
    c) évaluation de l'authenticité de la caractéristique de sécurité au moyen de la valeur de mesure.

13. Procédé selon la revendication 12, l'étape b) comprenant en outre une analyse de la valeur de mesure pour la détermination d'une caractéristique de mémoire du luminophore de stockage et l'évaluation d'authenticité dans l'étape c) étant réalisée au moyen du résultat de cette analyse.

14. Procédé selon l'une quelconque des revendications 12 et 13, l'étape b) contenant en outre au moins l'une des étapes suivantes :

- détermination et analyse d'un paramètre de l'impulsion de charge et/ou de l'impulsion de lecture ;
- détermination et analyse d'un paramètre de mesure utilisé pour la capture de la valeur de mesure ;
- détermination et analyse d'un rayonnement de fond ;
- détermination et analyse d'une relation temporelle entre l'impulsion de charge et/ou l'impulsion de lecture et la capture de la valeur de mesure.

15. Procédé selon l'une quelconque des revendications 13 à 15, le luminophore de stockage optique présentant des centres de piège et des centres de luminescence,

- des porteurs de charges présents dans le luminophore de stockage optique étant situés, avant l'étape a), au moins partiellement dans les centres de piège, et
- du fait de l'impulsion de charge, les porteurs de charge passant des centres de luminescence au moins partiellement dans les centres de piège et/ou du fait de l'impulsion de lecture, passant des centres de piège au moins partiellement dans les centres de luminescence et relaxant en rayonnant dans les centres de luminescence.

16. Procédé selon l'une quelconque des revendications 13 à 16, une conductivité électrique du luminophore de stockage optique pendant la soumission à la pulsation de charge et/ou à la pulsation de lecture dans l'étape a) étant supérieure qu'à l'extérieur de la soumission.

Fig. 1

EP 4 026 882 B1

Fig. 2

39

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4387112 A
- EP 1316924 A1
- WO 20100064956 A1
- DE 102011010756 A1
- WO 03014258 A1

**In der Beschreibung aufgeführte Nicht-Patentliteratur**

- IUPAC Gold Book: Phosphorescence. 23. August 2017
- Persistent luminescence beats the afterglow: 400 years of persistent luminescence. *Electrochem. Soc. Interface,* 2009, vol. 18 (4), 42-45
- **GELLER, S.** Crystal chemistry of the garnets. *Zeitschrift für Kristallographie-Crystalline Materials,* 1967, vol. 125 (1-6), 1-47
- **GREW, E.S. ; LOCOCK, A.J. ; MILLS, S.J. ; GALUSKINA, I.O. ; GALUSKIN, E.V. ; HALENIUS, U.** Nomenclature of the garnet supergroup. *IMA-Report, American Mineralogist,* 2013, vol. 98, 785-811